# EUROPEAN PATENT APPLICATION

(11) **EP 4 852 534 A1**
(43) Date of publication of application: **09.12.2026**
(21) Application number: 25754482.5
(22) Date of filing: 07.01.2025
(51) Int. Cl.: H04W 52/02

(54) **COMMUNICATION METHOD AND APPARATUS**

(30) Priority: 18.02.2024 CN 202410183164
(71) Applicant: HUAWEI TECHNOLOGIES CO., LTD., Shenzhen, Guangdong 518129 (CN)
(72) Inventor: KUANG, Yiru, Shenzhen, Guangdong 518129 (CN); XUE, Yifan, Shenzhen, Guangdong 518129 (CN); HAN, Feng, Shenzhen, Guangdong 518129 (CN)
(74) Representative: Huawei European IPR
(86) International application number: PCT/CN2025/070985
(87) International publication number: WO 2025/171755

(57) **Abstract**

This application relates to a communication method and apparatus. A central unit sends first indication information or second indication information to a distributed unit, where the first indication information indicates the distributed unit to activate LP-WUS monitoring by a terminal device, and the second indication information is used to determine whether to activate the LP-WUS monitoring by the terminal device. In embodiments of this application, information exchange can be implemented between the central unit and the distributed unit. In this case, the central unit and the distributed unit may reach an agreement on whether to activate the LP-WUS monitoring by the terminal device, to activate the LP-WUS monitoring by the terminal device.

## Description

### CROSS-REFERENCE TO RELATED APPLICATIONS

This application claims priority to Chinese Patent Application No. 202410183164.6, filed with the China National Intellectual Property Administration on February 18, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

To reduce power consumption of a user equipment (user equipment, UE), the UE may receive a signal via an independent low-power small circuit. The low-power small circuit may be implemented by using a circuit or a chip with a simple structure, and has low power consumption. The low-power small circuit may be referred to as a wake-up radio (wake-up radio, WUR). The WUR may be configured to receive a low-power wake-up signal (low-power wake-up signal, LP-WUS) from a network device, and may obtain wake-up indication information through demodulation based on an information bit carried in the LP-WUS, to wake up a main radio (main radio, MR) that is disabled (or in a sleep state) in the terminal device.

After the WUR is introduced, when LP-WUS monitoring by the UE is activated, the UE may monitor the LP-WUS on the WUR. However, for a network device including a central unit (central unit, CU) and/or a distributed unit (distributed unit, DU), how to activate the LP-WUS monitoring by the UE remains to be studied.

### SUMMARY

Embodiments of this application provide a communication method and apparatus, to activate LP-WUS monitoring by a UE in a CU-DU architecture.

According to a first aspect, a first communication method is provided. The method is applied to a central unit side. To be specific, the method may be performed by a central unit, may be performed by a larger device including the central unit, or may be performed by a chip system or another functional module. The chip system or the functional module can implement functions of the central unit, and the chip system or the functional module is, for example, disposed in the central unit. The central unit is, for example, a functional unit included in a network device, and may also be referred to as, for example, a base station central unit, or may have another name. For example, the central unit is a CU. The network device includes, for example, an access network device like a base station. The method includes: sending first indication information or second indication information to a distributed unit, where the first indication information indicates the distributed unit to activate LP-WUS monitoring by a terminal device, and the second indication information is used to determine whether to activate the LP-WUS monitoring by the terminal device.

In this embodiment of this application, whether to activate the LP-WUS monitoring by the terminal device may be decided by the central unit. In this case, if determining to activate the LP-WUS monitoring by the terminal device, the central unit may send the first indication information to the distributed unit, to indicate the distributed unit to activate the LP-WUS monitoring by the terminal device. Alternatively, whether to activate the LP-WUS monitoring by the terminal device may be decided by the distributed unit. In this case, the central unit may send second indication information to the distributed unit, and the distributed unit may determine, based on the second indication information, whether to activate the LP-WUS monitoring by the UE. It can be learned that in this embodiment of this application, information exchange can be implemented between the central unit and the distributed unit. In this case, the central unit and the distributed unit may reach an agreement on whether to activate the LP-WUS monitoring by the terminal device, to activate the LP-WUS monitoring by the terminal device.

In an optional implementation, the method further includes: determining the first indication information based on capability information of the terminal device and/or a measurement result of the terminal device. If deciding whether to activate the LP-WUS monitoring by the terminal device, the central unit may decide, based on the capability information of the terminal device and/or the measurement result of the terminal device, whether to activate the LP-WUS monitoring by the terminal device. For example, when a channel condition of the terminal device is good, the LP-WUS monitoring by the UE may be activated, to reduce power consumption of the terminal device.

In an optional implementation, the second indication information includes capability information of the terminal device and/or a measurement result of the terminal device. If the distributed unit decides whether to activate the LP-WUS monitoring by the UE, the central unit may send, to the distributed unit, the information used for decision, so that the distributed unit makes a decision. Optionally, if the distributed unit has stored the information used for decision, the central unit may not need to send the information. For example, if the distributed unit has stored the capability information of the terminal device, the central unit may not send the second indication information to the distributed unit, or the central unit may send the second indication information, where the second indication information may include the measurement result of the terminal device but does not include the capability information of the terminal device, to reduce transmission of the redundant information.

In an optional implementation, the method further includes: receiving first configuration information from the distributed unit, where the first configuration information is used to configure the LP-WUS monitoring by the terminal device; and sending the first configuration information to the terminal device. The information used to configure the LP-WUS monitoring by the terminal device may be generated by the distributed unit. The distributed unit may send the first configuration information to the central unit, so that the central unit may send the first configuration information to the terminal device.

In an optional implementation, the first configuration information is further used to activate the LP-WUS monitoring by the terminal device. For example, in a scenario, once being configured, the LP-WUS monitoring by the terminal device is activated. In this case, the first configuration information may be used to configure and/or activate the LP-WUS monitoring by the terminal device.

In an optional implementation, the method further includes: receiving fifth indication information from the terminal device, where the fifth indication information indicates that the LP-WUS monitoring by the terminal device is activated. For example, in a scenario, the terminal device autonomously determines whether to activate the LP-WUS monitoring by the terminal device. If activating the LP-WUS monitoring by the terminal device, the terminal device may send the fifth indication information to the central unit, so that the central unit determines that the LP-WUS monitoring by the terminal device is activated.

According to a second aspect, a second communication method is provided. The method is applied to a distributed unit side. To be specific, the method may be performed by a distributed unit, may be performed by a larger device including the distributed unit, or may be performed by a chip system or another functional module. The chip system or the functional module can implement functions of the distributed unit, and the chip system or the functional module is, for example, disposed in the distributed unit. The distributed unit is, for example, a functional unit included in a network device, and may also be referred to as, for example, a base station distributed unit, or may have another name. For example, the distributed unit is a DU. The network device includes, for example, an access network device like a base station. The method includes: receiving first indication information or second indication information from a central unit, where the first indication information indicates the distributed unit to activate LP-WUS monitoring by a terminal device, and the second indication information is used to determine whether to activate the LP-WUS monitoring by the terminal device.

In an optional implementation, the second indication information includes capability information of the terminal device and/or a measurement result of the terminal device.

In an optional implementation, the method further includes: sending first configuration information to the central unit, where the first configuration information is used to configure the LP-WUS monitoring by the terminal device.

In an optional implementation, the first configuration information is further used to activate the LP-WUS monitoring by the terminal device.

In an optional implementation, the method further includes: sending first activation information to the terminal device, where the first activation information is used to activate the LP-WUS monitoring by the terminal device.

For technical effects achieved by the second aspect or the optional implementations, refer to the descriptions of the technical effects of the first aspect or the corresponding implementations.

According to a third aspect, a third communication method is provided. The method is applied to a terminal apparatus side. To be specific, the method may be performed by a terminal apparatus, may be performed by another device including functions of a terminal device, or may be performed by a chip system (or a chip) or another functional module. The chip system or the functional module can implement the functions of the terminal device, and the chip system or the functional module is, for example, disposed in the terminal device. The following uses an example in which the method is performed by the terminal device. The method includes: receiving first information, where the first information indicates to deconfigure LP-WUS monitoring by the terminal device, and/or indicates to stop or release a timer, and the timer is used to determine time at which the terminal device enters an LP-WUS monitoring period; and deconfiguring, based on the first information, the LP-WUS monitoring by the terminal device, and stopping and/or releasing the timer.

This embodiment of this application provides a mechanism for how the LP-WUS monitoring by the terminal device is deconfigured. When the LP-WUS monitoring by the terminal device is deconfigured, this embodiment of this application further provides a processing manner for the timer. For example, in addition to deconfiguring the LP-WUS monitoring by the terminal device, the terminal device may further stop and/or release the timer. In this way, the terminal device no longer enters the LP-WUS monitoring period based on the timer, so that a status of the timer is consistent with a status of the LP-WUS monitoring by the terminal device.

In an optional implementation, before receiving the first information, the terminal device monitors an LP-WUS via a WUR, where the first information is included in a first LP-WUS; or before receiving the first information, the terminal device monitors a signal via an MR, where the first information is included in an RRC message. Before the terminal device receives the first information, if the terminal device monitors the LP-WUS via the WUR, or the terminal device is in the LP-WUS monitoring period, the network device may send the first information via the LP-WUS, so that the terminal device can receive the first information. Alternatively, before the terminal device receives the first information, if the terminal device monitors the signal via the MR, the network device may send the first information via the RRC message or a message of another protocol layer, so that the terminal device can receive the first information. The another protocol layer includes, for example, a media access control (media access control, MAC) layer or a physical layer.

In an optional implementation, the MR is enabled based on the first information, where before receiving the first information, the terminal device monitors the LP-WUS via the WUR; or monitoring the signal via the MR is kept based on the first information, where before receiving the first information, the terminal device monitors the signal via the MR. Before receiving the first information, if monitoring the LP-WUS via the WUR, or being in the LP-WUS monitoring period, when receiving the first information or after receiving the first information, the terminal device may enable the MR, to enter the MR to monitor the signal, instead of monitoring the LP-WUS via the WUR. Alternatively, before receiving the first information, if monitoring the signal via the MR, when receiving the first information or after receiving the first information, the terminal device may continue to monitor the signal via the MR, and does not monitor the LP-WUS via the WUR.

In an optional implementation, the method further includes: receiving second information, where the second information is used to configure the LP-WUS monitoring by the terminal device; and configuring the LP-WUS monitoring by the terminal device based on the second information. Before being deconfigured, the LP-WUS monitoring by the terminal device may be first configured.

In an optional implementation, the method further includes: after the LP-WUS monitoring by the terminal device is configured, keeping monitoring the signal via the MR; receiving third information and/or the timer expiring, where the third information indicates the terminal device to enter the LP-WUS monitoring period; and entering the LP-WUS monitoring period. For example, before receiving the second information, the terminal device has an uplink service and/or a downlink service that are/is being executed on the MR. In this case, even if the terminal device receives the second information, the terminal device may not immediately enter the LP-WUS monitoring period. This can ensure that the service on the MR continues to be executed, and improve service continuity.

In an optional implementation, the method further includes: receiving first indication information, where the first indication information indicates the terminal device to keep monitoring the signal via the MR after the LP-WUS monitoring by the terminal device is configured (or activated, or configured and activated); or the first indication information indicates the terminal device to keep monitoring the signal via the MR after the LP-WUS monitoring by the terminal device is configured (or activated, or configured and activated), until the information indicating the terminal device to enter the LP-WUS monitoring period is received and/or the timer expires. That the terminal device does not immediately enter the LP-WUS monitoring period after the LP-WUS monitoring by the terminal device is configured and/or activated may be considered as a mechanism, and the mechanism may be enabled or disabled. For example, the network device may send the first indication information to the terminal device, to enable or disable the mechanism via the first indication information. This is flexible.

According to a fourth aspect, a fourth communication method is provided. The method is applied to a network device side. To be specific, the method may be performed by a network apparatus, may be performed by another device including functions of a network device, or may be performed by a chip system (or a chip) or another functional module. The chip system or the functional module can implement the functions of the network device, and the chip system or the functional module is, for example, disposed in the network device. The following uses an example in which the method is performed by the network device. The network device includes, for example, an access network device like a base station. The method includes: sending first information, where the first information indicates to deconfigure LP-WUS monitoring by a terminal device, and/or indicates to stop or release a timer, and the timer is used to determine time at which the terminal device enters an LP-WUS monitoring period.

In an optional implementation, before the first information is sent, the terminal device monitors an LP-WUS via a WUR, where the first information is included in a first LP-WUS; or before the first information is sent, the terminal device monitors a signal via an MR, where the first information is included in an RRC message.

In an optional implementation, the method further includes: sending second information, where the second information is used to configure the LP-WUS monitoring by the terminal device.

In an optional implementation, the method further includes: sending first indication information, where the first indication information indicates the terminal device to keep monitoring the signal via the MR after the LP-WUS monitoring by the terminal device is configured (or activated, or configured and activated); or the first indication information indicates the terminal device to keep monitoring the signal via the MR after the LP-WUS monitoring by the terminal device is configured (or activated, or configured and activated), until information indicating the terminal device to enter the LP-WUS monitoring period is received and/or the timer expires.

For technical effects achieved by the fourth aspect or the optional implementations, refer to the descriptions of the technical effects of the third aspect or the corresponding implementations.

According to a fifth aspect, a fifth communication method is provided. The method is applied to a terminal apparatus side. To be specific, the method may be performed by a terminal apparatus, may be performed by another device including functions of a terminal device, or may be performed by a chip system (or a chip) or another functional module. The chip system or the functional module can implement the functions of the terminal device, and the chip system or the functional module is, for example, disposed in the terminal device. The following uses an example in which the method is performed by the terminal device. The method includes: receiving fourth information, where the fourth information indicates to deactivate LP-WUS monitoring by the terminal device, and/or indicates to stop or skip starting a timer, and the timer is used to determine time at which the terminal device enters an LP-WUS monitoring period; and deactivating, based on the fourth information, the LP-WUS monitoring by the terminal device, and stopping or skipping starting the timer.

This embodiment of this application provides a mechanism for how the LP-WUS monitoring by the terminal device is deactivated. When the LP-WUS monitoring by the terminal device is deactivated, this embodiment of this application further provides a processing manner for the timer. For example, in addition to deactivating the LP-WUS monitoring by the terminal device, the terminal device may further stop and/or skip starting a timer. In this way, the terminal device may not enter the LP-WUS monitoring period based on the timer, so that a status of the timer is consistent with a status of the LP-WUS monitoring by the terminal device.

In an optional implementation, before receiving the fourth information, the terminal device monitors an LP-WUS via a WUR, where the fourth information is included in a first LP-WUS; or before receiving the fourth information, the terminal device monitors a signal via an MR, where the fourth information is included in an RRC message. Before the terminal device receives the fourth information, if the terminal device monitors the LP-WUS via the WUR, or the terminal device is in the LP-WUS monitoring period, the network device may send the fourth information via the LP-WUS, so that the terminal device can receive the fourth information. Alternatively, before the terminal device receives the fourth information, if the terminal device monitors the signal via the MR, the network device may send the fourth information via the RRC message or a message of another protocol layer, so that the terminal device can receive the fourth information. The another protocol layer includes, for example, a MAC layer or a physical layer.

In an optional implementation, the MR is enabled based on the fourth information, where before receiving the fourth information, the terminal device monitors a signal via the WUR; or monitoring the signal via the MR is kept based on the fourth information, where before receiving the fourth information, the terminal device monitors the signal via the MR. Before receiving the fourth information, if monitoring the LP-WUS via the WUR, or being in the LP-WUS monitoring period, when receiving the fourth information or after receiving the fourth information, the terminal device may enable the MR, to enter the MR to monitor the signal, instead of monitoring the LP-WUS via the WUR. Alternatively, before receiving the fourth information, if monitoring the signal via the MR, when receiving the fourth information or after receiving the fourth information, the terminal device may continue to monitor the signal via the MR, and does not monitor the LP-WUS via the WUR.

In an optional implementation, the method further includes: receiving fifth information, where the fifth information is used to configure the LP-WUS monitoring by the terminal device; configuring the LP-WUS monitoring by the terminal device based on the fifth information; receiving sixth information, where the sixth information is used to activate the LP-WUS monitoring by the terminal device; and activating the LP-WUS monitoring by the terminal device based on the sixth information. Before being deactivated, the LP-WUS monitoring by the terminal device may be first configured and activated.

In an optional implementation, the method further includes: after the LP-WUS monitoring by the terminal device is activated, monitoring the signal via the MR; receiving third information and/or the timer expiring, where the third information indicates the terminal device to enter the LP-WUS monitoring period; and entering the LP-WUS monitoring period.

In an optional implementation, the method further includes: receiving first indication information, where the first indication information indicates the terminal device to keep monitoring the signal via the MR after the LP-WUS monitoring by the terminal device is activated; or the first indication information indicates the terminal device to keep monitoring the signal via the MR after the LP-WUS monitoring by the terminal device is activated, until the information indicating the terminal device to enter the LP-WUS monitoring period is received and/or the timer expires.

For technical effects of some optional implementations of the fifth aspect, refer to the descriptions of the technical effects of the third aspect or the corresponding implementations.

According to a sixth aspect, a sixth communication method is provided. The method is applied to a network device side. To be specific, the method may be performed by a network apparatus, may be performed by another device including functions of a network device, or may be performed by a chip system (or a chip) or another functional module. The chip system or the functional module can implement the functions of the network device, and the chip system or the functional module is, for example, disposed in the network device. The following uses an example in which the method is performed by the network device. The network device includes, for example, an access network device like a base station. The method includes: sending fourth information, where the fourth information indicates to deactivate LP-WUS monitoring by a terminal device, and/or indicates to stop or skip starting a timer, and the timer is used to determine time at which the terminal device enters an LP-WUS monitoring period.

In an optional implementation, before the fourth information is sent, the terminal device monitors an LP-WUS via a WUR, where the fourth information is included in a first LP-WUS; or before the fourth information is sent, the terminal device monitors a signal via an MR, where the fourth information is included in an RRC message.

In an optional implementation, the method further includes: sending fifth information, where the fifth information is used to configure the LP-WUS monitoring by the terminal device; and sending sixth information, where the sixth information is used to activate the LP-WUS monitoring by the terminal device.

In an optional implementation, the method further includes: sending first indication information, where the first indication information indicates the terminal device to monitor the signal via the MR after the LP-WUS monitoring by the terminal device is activated.

For technical effects of the sixth aspect or the optional implementations, refer to the descriptions of the technical effects of the fifth aspect or the corresponding implementations.

According to a seventh aspect, a seventh communication method is provided. The method is applied to a terminal apparatus side. To be specific, the method may be performed by a terminal apparatus, may be performed by another device including functions of a terminal device, or may be performed by a chip system (or a chip) or another functional module. The chip system or the functional module can implement the functions of the terminal device, and the chip system or the functional module is, for example, disposed in the terminal device. The following uses an example in which the method is performed by the terminal device. The method includes: determining that a first measurement result is less than or equal to a first threshold, where the first measurement result is a measurement result of the terminal device; and deactivating LP-WUS monitoring by the terminal device, and stopping or skipping starting a timer, where the timer is used to determine time at which the terminal device enters an LP-WUS monitoring period.

This embodiment of this application provides a mechanism for how the LP-WUS monitoring by the terminal device is deactivated. When the LP-WUS monitoring by the terminal device is deactivated, this embodiment of this application further provides a processing manner for the timer. For example, in addition to deactivating the LP-WUS monitoring by the terminal device, the terminal device may further stop and/or skip starting a timer. In this way, the terminal device may not enter the LP-WUS monitoring period based on the timer, so that a status of the timer is consistent with a status of the LP-WUS monitoring by the terminal device.

In an optional implementation, the method further includes: sending seventh information, where the seventh information indicates that the LP-WUS monitoring by the terminal device is deactivated. If activating the LP-WUS monitoring by the terminal device, the terminal device may notify a network device, so that the network device knows a status of the terminal device.

In an optional implementation, the method further includes: enabling an MR, where before determining that the first measurement result is less than or equal to the first threshold, the terminal device monitors an LP-WUS via a WUR; or keeping monitoring a signal via an MR, where before determining that the first measurement result is less than or equal to the first threshold, the terminal device monitors the signal via the MR. Before determining that the first measurement result is less than or equal to the first threshold, if monitoring the LP-WUS via the WUR, or being in the LP-WUS monitoring period, when determining that the first measurement result is less than or equal to the first threshold or after determining that the first measurement result is less than or equal to the first threshold, the terminal device may enable the MR, to enter the MR to monitor the signal, instead of monitoring the LP-WUS via the WUR. Alternatively, before determining that the first measurement result is less than or equal to the first threshold, if monitoring the signal via the MR, when determining that the first measurement result is less than or equal to the first threshold or after determining that the first measurement result is less than or equal to the first threshold, the terminal device may continue to monitor the signal via the MR, instead of monitoring the LP-WUS via the WUR.

In an optional implementation, the method further includes: receiving fifth information, where the fifth information is used to configure the LP-WUS monitoring by the terminal device; configuring the LP-WUS monitoring by the terminal device based on the fifth information; when a second measurement result is greater than or equal to a second threshold, activating the LP-WUS monitoring by the terminal device, where the second measurement result is a measurement result of the terminal device. Before being deactivated, the LP-WUS monitoring by the terminal device may be first configured. After the LP-WUS monitoring by the terminal device is configured, the terminal device may autonomously determine whether to activate the LP-WUS monitoring by the terminal device.

In an optional implementation, the method further includes: after the LP-WUS monitoring by the terminal device is activated, keeping monitoring the signal via the MR; receiving third information and/or the timer expiring, where the third information indicates the terminal device to enter the LP-WUS monitoring period; and entering the LP-WUS monitoring period.

In an optional implementation, the method further includes: sending eighth information, where the eighth information indicates that the LP-WUS monitoring by the terminal device is activated.

In an optional implementation, the method further includes: receiving first indication information, where the first indication information indicates the terminal device to keep monitoring the signal via the MR after the LP-WUS monitoring by the terminal device is activated.

For technical effects of some optional implementations of the seventh aspect, refer to the descriptions of the technical effects of the third aspect the corresponding implementations.

According to an eighth aspect, an eighth communication method is provided. The method is applied to a network apparatus side. To be specific, the method may be performed by a network apparatus, may be performed by another device including functions of a network device, or may be performed by a chip system (or a chip) or another functional module. The chip system or the functional module can implement the functions of the network device, and the chip system or the functional module is, for example, disposed in the network device. The following uses an example in which the method is performed by the network device. The network device includes, for example, an access network device like a base station. The method includes: sending first indication information, where the first indication information indicates a terminal device to keep monitoring a signal via an MR of the terminal device after LP-WUS monitoring by the terminal device is activated.

In an optional implementation, the method further includes: sending fifth information, where the fifth information is used to configure the LP-WUS monitoring by the terminal device.

In an optional implementation, receiving eighth information from the terminal device, where the eighth information indicates that the LP-WUS monitoring by the terminal device is activated.

In an optional implementation, the method further includes: receiving seventh information from the terminal device, where the seventh information indicates that the LP-WUS monitoring by the terminal device is deactivated.

For technical effects of the eighth aspect or the optional implementations, refer to the descriptions of the technical effects of the seventh aspect or the corresponding implementations.

According to a ninth aspect, a communication apparatus is provided. The communication apparatus may be the central unit according to either the first aspect or the second aspect. The communication apparatus has functions of the central unit. The communication apparatus is, for example, a central unit, or another device including functions of the central unit, or a chip system (or a chip) or another functional module. The chip system or the functional module can implement the functions of the central unit. For example, the chip system or the functional module is disposed in the central unit. Optionally, the central unit is a network device, or is disposed in the network device. The network device includes, for example, an access network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function; or the sending unit and the receiving unit may be different functional modules, and the transceiver unit is a general term for these functional modules.

In an optional implementation, the transceiver unit (or the sending unit) is configured to send first indication information or second indication information to a distributed unit, where the first indication information indicates the distributed unit to activate LP-WUS monitoring by a terminal device, and the second indication information is used to determine whether to activate the LP-WUS monitoring by the terminal device.

In an optional implementation, the communication apparatus further includes a storage unit (sometimes also referred to as a storage module). The processing unit is configured to be coupled to the storage unit, and execute a program or instructions in the storage unit, to cause the communication apparatus to perform the functions of the central unit according to either the first aspect or the second aspect.

According to a tenth aspect, a communication apparatus is provided. The communication apparatus may be the distributed unit according to either the first aspect or the second aspect. The communication apparatus has functions of the distributed unit. The communication apparatus is, for example, a distributed unit, or another device including functions of the distributed unit, or a chip system (or a chip) or another functional module. The chip system or the functional module can implement the functions of the distributed unit. For example, the chip system or the functional module is disposed in the distributed unit. Optionally, the distributed unit is a network device, or is disposed in the network device. The network device includes, for example, an access network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the ninth aspect.

In an optional implementation, the transceiver unit (or a receiving unit) is configured to receive first indication information or second indication information from a central unit, where the first indication information indicates the distributed unit to activate LP-WUS monitoring by a terminal device, and the second indication information is used to determine whether to activate the LP-WUS monitoring by the terminal device.

In an optional implementation, the communication apparatus further includes a storage unit (sometimes also referred to as a storage module). The processing unit is configured to be coupled to the storage unit, and execute a program or instructions in the storage unit, to cause the communication apparatus to perform the functions of the central unit according to either the first aspect or the second aspect.

According to an eleventh aspect, a communication apparatus is provided. The communication apparatus may implement functions of the terminal device according to any one of the third aspect to the eighth aspect. The communication apparatus has the functions of the terminal device. The communication apparatus is, for example, a terminal device, or another device including functions of the terminal device, or a chip system (or a chip) or another functional module. The chip system or the functional module can implement the functions of the terminal device. For example, the chip system or the functional module is disposed in the terminal device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the ninth aspect.

In an optional implementation, the transceiver unit (a receiving unit) is configured to receive first information, where the first information indicates to deconfigure LP-WUS monitoring by the terminal device, and/or indicates to stop or release a timer, and the timer is used to determine time at which the terminal device enters an LP-WUS monitoring period. The processing unit is configured to: deconfigure, based on the first information, the LP-WUS monitoring by the terminal device, and stop and/or release the timer.

In an optional implementation, the transceiver unit (a receiving unit) is configured to receive fourth information, where the fourth information indicates to deactivate LP-WUS monitoring by the terminal device, and/or indicates to stop or skip starting a timer, and the timer is used to determine time at which the terminal device enters an LP-WUS monitoring period. The processing unit is configured to: deactivate, based on the fourth information, the LP-WUS monitoring by the terminal device, and stop or skip starting a timer.

In an optional implementation, the processing unit is configured to determine that a first measurement result is less than or equal to a first threshold, where the first measurement result is a measurement result of the terminal device. The processing unit is further configured to: deactivate LP-WUS monitoring by the terminal device, and stop or skip starting a timer, where the timer is used to determine time at which the terminal device enters an LP-WUS monitoring period.

In an optional implementation, the communication apparatus further includes a storage unit (sometimes also referred to as a storage module). The processing unit is configured to be coupled to the storage unit, and execute a program or instructions in the storage unit, to cause the communication apparatus to perform the functions of the terminal device according to either the third aspect or the eighth aspect.

According to a twelfth aspect, a communication apparatus is provided. The communication apparatus may implement functions of the network device according to any one of the third aspect to the eighth aspect. The communication apparatus has the functions of the network device. The communication apparatus is, for example, a network device, or another device including functions of the network device, or a chip system (or a chip) or another functional module. The chip system or the functional module can implement the functions of the network device. For example, the chip system or the functional module is disposed in the network device. The network device includes, for example, an access network device and/or a core network device. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the ninth aspect.

In an optional implementation, the transceiver unit (a sending unit) is configured to send first information, where the first information indicates to deconfigure LP-WUS monitoring by a terminal device, and/or indicates to stop or release a timer, and the timer is used to determine time at which the terminal device enters an LP-WUS monitoring period.

In an optional implementation, the transceiver unit (a sending unit) is configured to send fourth information, where the fourth information indicates to deactivate LP-WUS monitoring by a terminal device, and/or indicates to stop or skip starting a timer, and the timer is used to determine time at which the terminal device enters an LP-WUS monitoring period.

In an optional implementation, the transceiver unit (a sending unit) is configured to send first indication information, where the first indication information indicates a terminal device to keep monitoring a signal via an MR of the terminal device after LP-WUS monitoring by the terminal device is activated.

In an optional implementation, the communication apparatus further includes a storage unit (sometimes also referred to as a storage module). The processing unit is configured to be coupled to the storage unit, and execute a program or instructions in the storage unit, to cause the communication apparatus to perform the functions of the network device according to either the third aspect or the eighth aspect.

According to a thirteenth aspect, a communication apparatus is provided. The communication apparatus may be a central unit, or a chip or a chip system used in the central unit. The communication apparatus includes a processor. The processor is configured to cause the communication apparatus to perform the method performed by the central unit in the foregoing aspects. Optionally, the processor is coupled to a memory. When the processor reads a computer program or instructions, the communication apparatus is caused to perform the method performed by the central unit in the foregoing aspects. The memory is configured to store the computer program or the instructions, and may be included in the communication apparatus, or may be disposed outside the communication apparatus. Optionally, the communication apparatus further includes a communication interface, and the processor invokes the computer program or the instructions from the communication interface and runs the computer program or the instructions.

According to a fourteenth aspect, a communication apparatus is provided. The communication apparatus may be a distributed unit, or a chip or a chip system used in the distributed unit. The communication apparatus includes a processor. The processor is configured to cause the communication apparatus to perform the method performed by the central unit in the foregoing aspects. Optionally, the processor is coupled to a memory. When the processor reads a computer program or instructions, the communication apparatus is caused to perform the method performed by the distributed unit in the foregoing aspects. The memory is configured to store the computer program or the instructions, and may be included in the communication apparatus, or may be disposed outside the communication apparatus. Optionally, the communication apparatus further includes a communication interface, and the processor invokes the computer program or the instructions from the communication interface and runs the computer program or the instructions.

According to a fifteenth aspect, a communication apparatus is provided. The communication apparatus may be a terminal device, or a chip or a chip system used in the terminal device. The communication apparatus includes a processor. The processor is configured to cause the communication apparatus to perform the method performed by the central unit in the foregoing aspects. Optionally, the processor is coupled to a memory. When the processor reads a computer program or instructions, the communication apparatus is caused to perform the method performed by the terminal device in the foregoing aspects. The memory is configured to store the computer program or the instructions, and may be included in the communication apparatus, or may be disposed outside the communication apparatus. Optionally, the communication apparatus further includes a communication interface, and the processor invokes the computer program or the instructions from the communication interface and runs the computer program or the instructions.

According to a sixteenth aspect, a communication apparatus is provided. The communication apparatus may be a network device, or a chip or a chip system used in the network device. The communication apparatus includes a processor. The processor is configured to cause the communication apparatus to perform the method performed by the central unit in the foregoing aspects. Optionally, the processor is coupled to a memory. When the processor reads a computer program or instructions, the communication apparatus is caused to perform the method performed by the network device in the foregoing aspects. The memory is configured to store the computer program or the instructions, and may be included in the communication apparatus, or may be disposed outside the communication apparatus. Optionally, the communication apparatus further includes a communication interface, and the processor invokes the computer program or the instructions from the communication interface and runs the computer program or the instructions.

According to a seventeenth aspect, a communication system is provided, including a central unit and a distributed unit. The central unit is configured to perform the method performed by the central unit according to either the first aspect or the second aspect, and the distributed unit is configured to perform the method performed by the distributed unit according to either the first aspect or the second aspect. For example, the central unit may be implemented by using the communication apparatus according to the ninth aspect or the thirteenth aspect, and the distributed unit may be implemented by using the communication apparatus according to the tenth aspect or the fourteenth aspect. Optionally, the communication system may further include another apparatus, for example, a terminal apparatus. This is not limited.

According to an eighteenth aspect, another communication system is provided, including a terminal device and a network device. The terminal device is configured to perform the method performed by the terminal device according to any one of the third aspect to the eighth aspect, and the network device is configured to perform the method performed by the network device according to any one of the third aspect to the eighth aspect. For example, the terminal device may be implemented by using the communication apparatus according to the eleventh aspect or the fifteenth aspect, and the network device may be implemented by using the communication apparatus according to the twelfth aspect or the sixteenth aspect. Optionally, the communication system may further include another apparatus. This is not limited.

According to a nineteenth aspect, a computer-readable storage medium is provided. The computer-readable storage medium is configured to store a computer program or instructions. When the computer program or the instructions are run, the method performed by the central unit, the distributed unit, the terminal device, and/or the network device in the foregoing aspects is implemented.

According to a twentieth aspect, a computer program product including instructions is provided. When a computer program or the instructions are run on a computer, the method according to the foregoing aspects is implemented.

### BRIEF DESCRIPTION OF DRAWINGS

FIG. 1 is a diagram of working manners of a circuit A and an MR;
FIG. 2 is a diagram of an application scenario according to an embodiment of this application;
FIG. 3 to FIG. 7 are flowcharts of several communication methods according to embodiments of this application;
FIG. 8 is a diagram of an apparatus according to an embodiment of this application; and
FIG. 9 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects, and indicates that three relationships may exist. For example, A and/or B may indicate the following three cases: A exists alone, both A and B exist, and B exists alone, where A and B may be singular or plural. The character "/" usually indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, and/or c indicates the following cases: Only a exists, only b exists, only c exists, both a and b exist, both a and c exist, or a, b, and c all exist, where a, b, and c may be singular or plural.

Ordinal numbers such as "first" and "second" mentioned in embodiments of this application are intended to distinguish between a plurality of objects, and are not intended to limit sizes, content, a sequence, a time sequence, priorities, importance degrees, or the like of the plurality of objects. In addition, step numbers in embodiments described in this application are merely intended to distinguish between different steps, but are not intended to limit a sequence of the steps. For example, S301 may be performed before S302, may be performed after S302, or may be performed simultaneously with S302.

The following describes some terms or concepts in embodiments of this application, to facilitate understanding of a person skilled in the art.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, a terminal device in a scenario, including but not limited to the following scenarios: a sensing scenario, cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self driving (self driving), telemedicine (remote medical), smart grid (smart grid), smart home, smart office, smart wearable, smart transportation, smart city (smart city), uncrewed aerial vehicles, robots, and indoor commercial scenarios (such as mobile phone projection, file sharing, and video transmission from a mobile phone to VR glasses). The terminal device may also be referred to as a V2X device when used in V2X, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a road side unit (road site unit, RSU). Alternatively, the terminal device may be a device in D2D communication, for example, an electricity meter or a water meter.

In addition, in embodiments of this application, the terminal device may alternatively be a terminal device in an internet of things (internet of things, IoT) system. IoT is an important part of future development of information technologies, and a main technical feature of the IoT is to connect things to a network by using a communication technology, to implement an intelligent network for human-machine interconnection or thing-thing interconnection.

If the various terminal devices described above are located on a vehicle (for example, placed in the vehicle or installed in the vehicle), the terminal devices all may be considered as vehicle-mounted terminal devices. The vehicle-mounted terminal devices are also referred to as, for example, on-board units (on-board units, OBUs). The terminal device in this application may be a vehicle-mounted module, a vehicle-mounted assembly, a vehicle-mounted component, a vehicle-mounted chip, or an on-board unit that is built in a vehicle as one or more components or units. The vehicle may implement a method in this application by using the vehicle-mounted module, the vehicle-mounted assembly, the vehicle-mounted component, the vehicle-mounted chip, or the on-board unit that is built in the vehicle.

The terminal device sometimes may be referred to as a UE, a terminal, an access station, a UE station, a remote station, a wireless communication device, a user apparatus, or the like.

In embodiments of this application, a communication apparatus configured to implement functions of the terminal device may be a terminal device, or may be an apparatus, for example, a chip system, that can support the terminal device in implementing the functions. The apparatus may be mounted in the terminal device. In the technical solutions provided in embodiments of this application, an example in which the apparatus configured to implement the functions of the terminal device is the terminal device is used to describe the technical solutions provided in embodiments of this application. In addition, for ease of description, an example in which the terminal device is a UE is used for description in embodiments of this application.

The network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB (NodeB), an evolved NodeB (evolved NodeB, eNodeB)/eNB, or a next generation NodeB (next generation NodeB, gNodeB)/gNB), a transmission reception point (transmission reception point, TRP), a base station subsequently evolved from the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. Alternatively, the access network device may be a server or the like. For example, a network device in a V2X technology may be a road side unit (road side unit, RSU). The following uses an example in which the access network device is a base station for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. A 5th generation (5th generation, 5G) mobile communication technology system is used as an example. The core network device includes, for example, an access and mobility management function (access and mobility management function, AMF), a session management function (session management function, SMF), a policy control function (policy control function, PCF), a user plane function (user plane function, UPF), or the like.

In a CU-DU architecture, the access network device may include one or more of logical network elements such as a central unit (central unit, CU), a distributed unit (distributed unit, DU), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

Functions of the CU may be implemented by one entity, or may be implemented by different entities. For example, the functions of the CU may be further divided. To be specific, a control plane and a user plane are separated and implemented by different entities, which are respectively a control plane CU entity (for example, a CU-control plane (control plane, CP) entity) and a user plane CU entity (for example, a CU-user plane (user plane, UP) entity). The CU-CP and the CU-UP may be coupled to the DU to jointly complete functions of the access network device.

In different systems, the CU (or the CU-CP and the CU-UP), the DU, or the RU may also have different names, but a person skilled in the art may understand meanings thereof. For example, in an open (open RAN, ORAN) system, the CU may also be referred to as an open CU (open CU, O-CU), the DU may also be referred to as an open DU (open DU, O-DU), the CU-CP may also be referred to as an open CU-CP (open CU-CP, O-CU-CP), the CU-UP may also be referred to as an open CU-UP (open CU-CP, O-CU-UP), and the RU may also be referred to as an open RU (open RU, O-RU). For ease of description, the CU, the CU-CP, the CU-UP, the DU, and the RU are used as examples for description in embodiments of this application. Any one of the CU (or the CU-CP or the CU-UP), the DU, and the RU in embodiments of this application may be implemented by using a software module, a hardware module, or a combination of the software module and the hardware module.

The CU and the DU may be configured based on protocol layer functions of a wireless network that are implemented by the CU and the DU. For example, the CU is configured to implement functions of a packet data convergence protocol (packet data convergence protocol, PDCP) layer and a protocol layer (for example, a radio resource control (radio resource control, RRC) layer and/or a service data adaptation protocol (service data adaptation protocol, SDAP) layer) above the packet data convergence protocol layer. The DU is configured to implement functions of protocol layers (for example, a radio link control (radio link control, RLC) layer, a media access control (media access control, MAC) layer, and/or a physical (physical, PHY) layer) below the PDCP layer. For another example, the CU is configured to implement functions of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer. For specific descriptions of the foregoing protocol layers, refer to a related technical specification of the 3rd generation partnership project (3rd generation partnership project, 3GPP) or a technical specification of another applicable communication protocol. The division into processing functions of the CU and the DU based on the protocol layers is merely an example, and another division manner may be used. This is not limited in embodiments of this application. For example, in a design, the CU or the DU may alternatively have a part of processing functions of a protocol layer through division. In a design, a part of functions of the RLC layer and functions of a protocol layer above the RLC layer are set on the CU, and remaining functions of the RLC layer and functions of a protocol layer below the RLC layer are set on the DU.

Optionally, in embodiments of this application, if the network device is in a distributed architecture, for example, the network device includes a CU and a DU, or includes a CU-CP, a CU-UP, and a DU, that the network device sends information to the UE may be specifically that the DU included in the network device sends information to the UE; and that the network device receives information from the UE may be specifically that the DU included in the network device receives information from the UE.

In embodiments of this application, a communication apparatus configured to implement functions of the network device may be a network device, or may be an apparatus, for example, a chip system, that can support the network device in implementing the functions. The apparatus may be mounted in the network device. In the technical solutions provided in embodiments of this application, the technical solutions provided in embodiments of this application are described by using an example in which the apparatus configured to implement the functions of the network device is a network device (for example, an apparatus configured to implement functions of the access network device is an access network device, and an apparatus configured to implement functions of the core network device is a core network device).

In embodiments of this application, when the provided method is performed by an apparatus (for example, a chip system) that can support the terminal device or the network device in implementing the function, receiving/sending may be understood as inputting/outputting, that is, the apparatus communicates with another apparatus/component in the terminal device or the network device. In addition, processing performed by a single execution body may also be divided into processing performed by a plurality of execution bodies, and these execution bodies may be logically and/or physically separated.

The following describes technical features in embodiments of this application.

When the UE is in a radio resource control (radio resource control, RRC) idle (idle) state or an RRC inactive (inactive) state, the UE obtains a location of a paging frame (paging frame, PF) and a location of a paging occasion (paging occasion, PO) in a PF through calculation based on a UE identity (ID) of the UE, to receive paging in the PO. Regardless of whether the UE performs the foregoing paging receiving procedure in the RRC idle state or the RRC inactive state, or performs data receiving in an RRC connected (connected) state, a same receiving module is used. For example, the receiving module is referred to as an MR. That the UE works on the MR may be understood as that the UE works on a 5th generation (5 generation, 5G) new radio (new radio, NR) primary link.

To further reduce power consumption, the UE may further receive a signal via a circuit independent of the MR, for example, referred to as a circuit A. The circuit A may be implemented by using a circuit or a chip with a simple structure, and has low power consumption. The circuit A is configured to detect a wake-up signal (wake-up signal, WUS) and the like from a network device, and the WUS received via the circuit A is also referred to as an LP-WUS. When a UE detects the LP-WUS or receives the LP-WUS and obtains the wake-up indication information through demodulation based on information carried in the LP-WUS, the UE wakes up an MR that is disabled (or in a sleep state) in the UE. The LP-WUS may be used to wake up at least one UE or at least one UE group. The circuit A is, for example, referred to as a wake-up radio (wake-up radio, WUR). To reduce power consumption of the WUR circuit, some simple modulation methods such as on-off keying (on off keying, OOK) are usually used for the LP-WUS signal. Correspondingly, the WUR in the UE receives the LP-WUS in an envelope detection manner. That the UE detects the wake-up signal or the like via the circuit A may be referred to as that the UE works on the WUR, or that the WUR is in a working state.

For example, the UE may first search for a signal of an NR primary link on the MR during power-on. If the signal of the NR primary link can be found, the UE may camp on the NR primary link. If the signal of the NR main link indicates configuration information of an LP-WUS, the UE may further search for the LP-WUS on the circuit A based on the configuration information of the LP-WUS. If the LP-WUS can be found, and signal quality of the LP-WUS is good, the UE may work on the circuit A. Alternatively, the UE may first search for a signal of an NR primary link on the MR during power-on. If the signal of the NR primary link cannot be found, the UE may search for an LP-WUS based on configuration information preset in the UE. If the LP-WUS can be found, and signal quality of the LP-WUS is good, the UE may work on the circuit A.

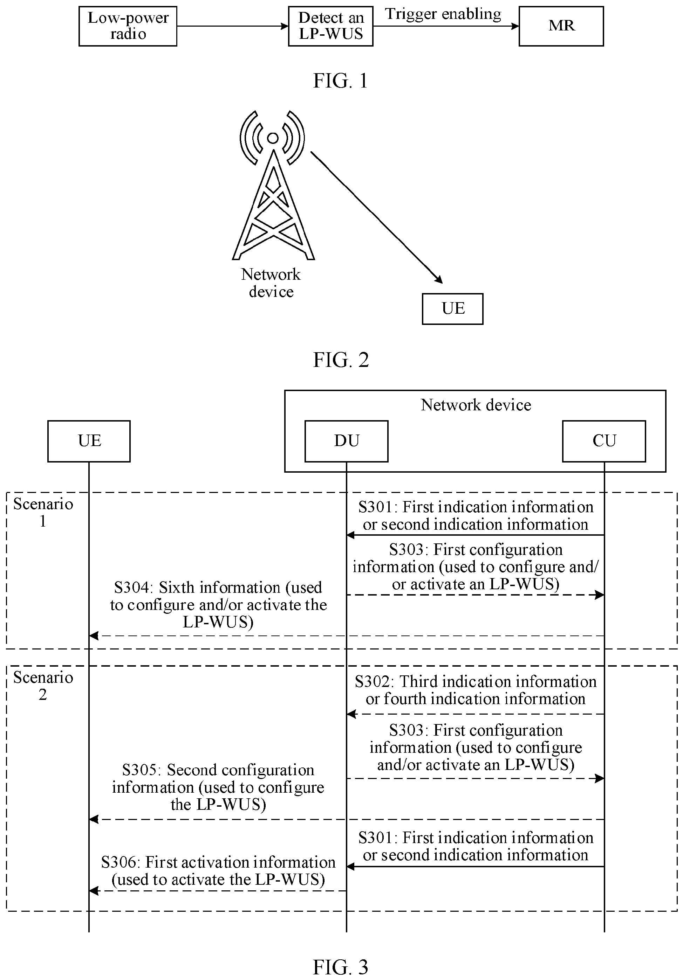

FIG. 1 is a diagram of working manners of a circuit A and an MR. In FIG. 1, an example in which the circuit A is a low-power radio is used. After working on the low-power radio, if detecting an LP-WUS corresponding to a UE, the UE may trigger enabling of the MR, to receive paging, initiate random access, or the like. However, if a UE does not detect an LP-WUS corresponding to the UE, the UE does not need to trigger enabling of the MR, and the MR may continue to be disabled (or continue to be in a sleep state). Therefore, working time of the MR can be shortened, to reduce power consumption of the UE.

After a WUR is introduced, when LP-WUS monitoring by the UE is activated, the UE may monitor the LP-WUS on the WUR. However, for a network device including a CU and/or a DU, how to activate the LP-WUS monitoring by the UE remains to be studied.

In view of this, in this embodiment of this application, whether to activate the LP-WUS monitoring by the UE may be decided by the CU. If determining to activate the LP-WUS monitoring by the UE, the CU may send first indication information to the DU, to indicate the DU to activate the LP-WUS monitoring by the UE. Alternatively, whether to activate the LP-WUS monitoring by the UE may be decided by the DU. In this case, the CU may send second indication information to the DU, and the DU may determine, based on the second indication information, whether to activate the LP-WUS monitoring by the UE. It can be learned that in this embodiment of this application, information exchange can be implemented between the CU and the DU. In this case, the CU and the DU may reach an agreement on whether to activate the LP-WUS monitoring by the UE, to activate the LP-WUS monitoring by the UE.

The technical solutions provided in embodiments of this application may be applied to a 4G system, for example, a long term evolution (long term evolution, LTE) system, may be applied to a 5G system, for example, a new radio (new radio, NR) system, or may be applied to a next-generation mobile communication system or another similar communication system, for example, a 6G system. This is not specifically limited. In addition, the technical solutions provided in embodiments of this application may also be applied to a D2D scenario, for example, an NR-D2D scenario, or may be applied to a V2X scenario, for example, an NR-V2X scenario. For example, embodiments of this application may be used in fields such as factory manufacturing, whole-house intelligence, intelligent driving, assisted driving, intelligent connected vehicles, or indoor commercial scenarios.

FIG. 2 is a diagram of an application scenario according to an embodiment of this application. FIG. 2 includes a UE and a network device. The network device may include an access network device and/or a core network device. For example, the network device may send a downlink signal, and the UE may receive and measure the downlink signal. The downlink signal includes, for example, one or more of the following: an LP-WUS, a synchronization signal and physical broadcast channel (physical broadcast channel, PBCH) block (synchronization signal/PBCH block, SSB), or a channel state information reference signal (channel state information reference signal, CSI-RS).

In embodiments of this application, a main radio (main radio, MR) may also be referred to as a main receiver (main receiver, MR), or may have another name. The following uses an MR as an example for description. It may be understood that the following MR may be a main radio or a main receiver. In embodiments of this application, a wake-up radio (wake-up radio, WUR) may also be referred to as a wake-up receiver (wake-up receiver, WUR), a wake-up circuit, a low-power radio (low-power radio, LR), a wake-up receiver module, or the like, or may have another name, the following uses a WUR as an example for description. It may be understood that the following WUR may be a wake-up radio or a wake-up receiver, and the following WUR may also be replaced with a wake-up circuit, a low-power radio, a wake-up receiver module, or the like. In embodiments of this application, that the UE enters an LP-WUS monitoring period may also be understood or replaced as follows: The UE monitors an LP-WUS, the UE monitors an LP-WUS on the WUR, the UE monitors an LP-WUS via the WUR, the UE enables the WUR, the UE enters the WUR (for example, enters the WUR from the MR), the UE switches to the WUR (for example, switches from the MR to the WUR), or the UE starts to work on the WUR. In embodiments of this application, that the UE operates on the MR may also be understood or replaced as follows: The UE works on the MR, the UE monitors a signal on the MR (the signal includes, for example, a downlink signal, and the downlink signal includes, for example, a physical downlink control channel (physical downlink control channel, PDCCH) and/or another downlink signal), or the UE monitors a signal via the MR. In embodiments of this application, that the UE remains operating on the MR, the UE keeps working on the MR, or the UE keeps monitoring a signal on the MR may be understood as follows: The UE has monitored a signal on the MR, and continues to monitor a signal on the MR.

In embodiments of this application, LP-WUS monitoring by the UE may be considered as a function. The function may be activated or deactivated, or may be configured or deconfigured. In embodiments of this application, configuring or deconfiguring the LP-WUS monitoring by the UE may also be understood as configuring or deconfiguring the LP-WUS, configuring or deconfiguring the LP-WUS monitoring performed by the UE via the WUR, or configuring or deconfiguring signal monitoring performed by the UE via the WUR. In embodiments of this application, activating or deactivating the LP-WUS monitoring by the UE may also be understood as activating or deactivating the LP-WUS, activating or deactivating the LP-WUS monitoring performed by the UE via the WUR, activating or deactivating signal monitoring performed by the UE via the WUR, or the like. In embodiments of this application, "activate" may alternatively be replaced with "enable".

For example, the network device includes a CU and a DU. In embodiments of this application, information used to activate the LP-WUS monitoring by the UE may be generated by the DU, or information used to configure the LP-WUS monitoring by the UE may be generated by the DU. However, whether to activate the LP-WUS monitoring by the UE may be decided by the CU or the DU; or whether to configure the LP-WUS monitoring by the UE may be decided by the CU or the DU. The information used to determine whether to activate the LP-WUS monitoring by the UE may be obtained by the CU; or the information used to determine whether to configure the LP-WUS monitoring by the UE may be obtained by the CU. Therefore, this embodiment of this application provides a cooperation mechanism between the CU and the DU, to activate, deactivate, configure, or deconfigure the LP-WUS monitoring by the UE.

First, several scenarios in which the LP-WUS monitoring by the UE is activated provided in this embodiment of this application are described.

### 1. Scenario 1

In this scenario, the network device may configure, for the UE, the LP-WUS monitoring by the UE. For example, the network device configures, for the UE via RRC signaling, the LP-WUS monitoring by the UE. Once being is configured, the LP-WUS monitoring by the UE is also activated synchronously.

### 2. Scenario 2

In this scenario, the network device may configure, for the UE, the LP-WUS monitoring by the UE. For example, the network device configures, for the UE via RRC signaling, the LP-WUS monitoring by the UE. After the configuration, the network device may activate the LP-WUS monitoring by the UE. For example, the network device activates the LP-WUS monitoring by the UE via layer (layer, L) 1 or layer 2 signaling.

### 3. Scenario 3

In this scenario, the network device may configure, for the UE, the LP-WUS monitoring. For example, the network device configures, for the UE via RRC signaling, the LP-WUS monitoring by the UE. In addition, the network device may further configure a threshold for the UE. The UE may autonomously determine, based on the threshold, whether to activate the LP-WUS monitoring by the UE, and the network device does not need to indicate to activate the LP-WUS monitoring by the UE. After activating the LP-WUS monitoring, the UE may notify the network device that the LP-WUS monitoring by the UE has been activated.

The following describes, with reference to the accompanying drawings, the method provided in embodiments of this application. Embodiments in this specification may be applied to the network architecture shown in FIG. 2. For example, the UE described in embodiments of this specification may be the UE in FIG. 2, and the network device described in embodiments of this specification may be the network device in FIG. 2.

An embodiment of this application provides a first communication method. FIG. 3 is a flowchart of the method. The embodiment shown in FIG. 3 is applicable to Scenario 1 or Scenario 2. In the embodiment shown in FIG. 3, an example in which a network device includes a CU and a DU is used.

S301: The CU sends first indication information to the DU, and correspondingly, the DU receives the first indication information from the CU; or the CU sends second indication information to the DU, and correspondingly, the DU receives the second indication information from the CU. The first indication information may indicate the DU to activate LP-WUS monitoring by a UE. The second indication information may be used to determine whether to activate the LP-WUS monitoring by the UE.

In an optional implementation, the CU determines whether to activate the LP-WUS monitoring by the UE. If determining to activate the LP-WUS monitoring by the UE, the CU may send the first indication information to the DU, to indicate the DU to activate the LP-WUS monitoring by the UE.

Optionally, the CU may determine, based on first information, whether to activate the LP-WUS monitoring by the UE. The first information includes, for example, one or more of the following: capability information of the UE, a measurement result of the UE, or second information. The second information may indicate that the measurement result of the UE meets or does not meet a threshold. If the measurement result meets the threshold, for example, is greater than or equal to the threshold, or the measurement result does not meet the threshold, for example, is less than the threshold, the second information may indicate that the measurement result of the UE is greater than or equal to the threshold, or indicate that the measurement result of the UE is less than the threshold. In embodiments of this application, "greater than or equal to" and "greater than" may be replaced with each other, and "less than or equal to" and "less than" may be replaced with each other.

The capability information of the UE may be sent by the UE to the CU. For example, before S301, the UE may send the capability information of the UE to the CU. Optionally, the DU may transparently transmit the capability information to the CU, but the DU does not obtain the capability information. After obtaining the capability information, the CU may send the capability information to the DU, so that the DU may also obtain the capability information. For example, the capability information indicates whether the UE supports a WUR and/or whether the UE supports receiving of the LP-WUS.

The measurement result may alternatively be sent by the UE to the CU. For example, before S301, the UE may send the measurement result to the CU. For example, the UE may send the measurement result to the DU, and the DU may send the measurement result to the CU. Optionally, in a process of forwarding the measurement result, the DU may also obtain the measurement result, or the DU may transparently transmit the measurement result to the CU, but the DU does not obtain the measurement result. For example, the UE may perform measurement on a received downlink signal, for example, perform radio resource management (radio resource management, RRM) measurement, to obtain a measurement result. The downlink signal includes, for example, a downlink signal (for example, a signal modulated through OOK) received via the WUR and/or a downlink signal (for example, an SSB and/or a CSI-RS) received via an MR. The measurement result may include a measurement result corresponding to the WUR, and/or a measurement result corresponding to the MR. The measurement result corresponding to the MR includes, for example, reference signal received power (reference signal received power, RSRP) and/or reference signal received quality (reference signal received quality, RSRQ); and the measurement result corresponding to the WUR includes, for example, RSRP and/or RSRQ. To distinguish from the measurement result corresponding to the MR, the measurement result corresponding to the WUR may be referred to as an LP measurement result. For example, the RSRP corresponding to the WUR is referred to as LP-RSRP, the RSRQ corresponding to the WUR is referred to as LP-RSRQ.

The second information may alternatively be sent by the UE to the CU. For example, before S301, the UE may send the second information to the CU. For example, the UE may send the second information to the DU, and the DU may send the second information to the CU. Optionally, in a process of forwarding the second information, the DU may also obtain the second information, or the DU may transparently transmit the second information to the CU, but the DU does not obtain the second information. For example, the UE may perform measurement on a received downlink signal, for example, perform RRM measurement, to obtain a measurement result, and the UE may determine a value relationship between the measurement result and a threshold, to indicate the value relationship between the measurement result and the threshold via the second information. In this case, the UE may not need to send the measurement result to the network device, but may send the second information. Usually, an information amount of the second information may be less than an information amount of the measurement result, so that transmission overheads can be reduced. The threshold may be configured by the network device, may be predefined in a protocol, or may be preconfigured in the UE.

In embodiments of this application, the measurement result corresponding to the WUR may be replaced with a measurement result of the WUR, a WUR-based measurement result, a measurement result obtained from the WUR, a measurement result obtained via the WUR, a measurement result obtained based on the WUR, a measurement result obtained based on a signal modulated through OOK, a measurement result obtained by measuring a signal modulated through OOK, or the like. A description manner is not limited. The following uses "the measurement result corresponding to the WUR" as an example for description.

In embodiments of this application, the measurement result corresponding to the MR may be replaced with a measurement result of the MR, an MR-based measurement result, a measurement result obtained from the MR, a measurement result obtained via the MR, a measurement result obtained based on the MR, a measurement result obtained based on an SSB and/or a CSI-RS, a measurement result obtained by measuring an SSB and/or a CSI-RS, or the like. A description manner is not limited. The following uses "the measurement result corresponding to the MR" as an example for description.

In embodiments of this application, the measurement result corresponding to the WUR may include a measurement result that is of a serving cell and corresponds to the WUR, for example, a measurement result obtained by the UE by measuring a serving cell on the WUR, or a measurement result obtained by the UE by measuring a signal (for example, an LP-WUS and/or another signal modulated through OOK) from a serving cell on the WUR. The measurement result corresponding to the MR may include a measurement result that is of a serving cell and corresponds to the MR, for example, a measurement result obtained by the UE by measuring a serving cell on the MR, or a measurement result obtained by the UE by measuring a signal (for example, an SSB and/or a CSI-RS) from a serving cell on the MR.

The CU may determine, based on the first information in a plurality of manners, whether to activate the LP-WUS monitoring by the UE. For example, if the capability information of the UE indicates that the UE supports the WUR and/or the UE supports the receiving of the LP-WUS, the CU may determine to activate the LP-WUS monitoring by the UE. Alternatively, the CU receives a measurement result from the UE. If the measurement result is greater than or equal to the threshold, the CU may determine to activate the LP-WUS monitoring by the UE. Alternatively, the CU receives the second information from the UE. If the second information indicates that the measurement result of the UE is greater than or equal to the threshold, the CU may determine to activate the LP-WUS monitoring by the UE. In addition, there may be further more determining manners for the CU, and details are not described.

In another optional implementation, if the DU determines whether to activate the LP-WUS monitoring by the UE, the CU may send the second indication information to the DU, and the DU may determine, based on the second indication information, whether to activate the LP-WUS monitoring by the UE. For example, the second indication information includes one or more of the following: capability information of the UE, a measurement result of the UE, or second information. The DU determines, based on the second indication information, whether to activate the LP-WUS monitoring by the UE. A determining manner may be similar to the determining manner of the CU described above, and details are not described again.

Optionally, the first indication information may be included in a UE context modification request (UE context modification request) message, a UE context setup request (UE context setup request) message, a downlink RRC message transfer (DL RRC message transfer) message, or another message. For example, an indication field may be newly added to the UE context modification request message or the UE context setup message, and the indication field may include the first indication information. Optionally, the indication field may be included in a CU to DU RRC information (CU to DU RRC Information) field in the UE context modification request message or the UE context setup message, or may be included in another field in the UE context modification request message or the UE context setup message, or the indication field may not be included in any existing field in the UE context modification request message or the UE context setup message, but exists as a newly added field. For example, the first indication information occupies one bit. If a value of the bit is "1", "true (true)", or the like, the DU is indicated to activate the LP-WUS monitoring by the UE, or the DU is indicated to configure and/or activate the LP-WUS monitoring by the UE; or if the first indication information exists, the DU is indicated to activate the LP-WUS monitoring by the UE, or the DU is indicated to configure and/or activate the LP-WUS monitoring by the UE. Alternatively, the first indication information may occupy two or more bits. This is not limited.

An implementation of the second indication information is similar to the implementation of the first indication information, and details are not described again.

Optionally, if this embodiment of this application is applied to Scenario 1, activation and configuration are a same behavior, and the first indication information may indicate the DU to configure and/or activate the LP-WUS monitoring by the UE; or the second indication information may be used to determine whether to configure and/or activate the LP-WUS monitoring by the UE. In addition, that the CU determines, based on the first information, whether to activate the LP-WUS monitoring by the UE may also be replaced as follows: The CU determines, based on the first information, whether to configure and/or activate the LP-WUS monitoring by the UE. A determining process is similar; or that the DU determines, based on the second indication information, whether to activate the LP-WUS monitoring by the UE may be replaced as follows: The DU determines, based on the second indication information, whether to configure and/or activate the LP-WUS monitoring by the UE. A determining process is similar.

Alternatively, if this embodiment of this application is applied to Scenario 2, activation and configuration are two processes, and the first indication information may indicate the DU to activate the LP-WUS monitoring by the UE, but does not indicate the DU to configure the LP-WUS monitoring by the UE; or the first indication information may be used to determine whether to activate the LP-WUS monitoring by the UE, but is not used to determine whether to configure the LP-WUS monitoring by the UE. For Scenario 2, optionally, before S301, S302 may be further included.

S302: The CU sends third indication information to the DU, and correspondingly, the DU receives the third indication information from the CU; or the CU sends fourth indication information to the DU, and correspondingly, the DU receives the fourth indication information from the CU. The third indication information may indicate the DU to configure the LP-WUS monitoring by the UE. The fourth indication information may be used to determine whether to configure the LP-WUS monitoring by the UE.

In an optional implementation, the CU determines whether to configure the LP-WUS monitoring by the UE. If determining to configure the LP-WUS monitoring by the UE, the CU may send the third indication information to the DU, to indicate the DU to configure the LP-WUS monitoring by the UE.

Optionally, the CU may determine, based on third information, whether to configure the LP-WUS monitoring by the UE. The third information includes, for example, one or more of the following: capability information of the UE, a measurement result of the UE, or fourth information. The fourth information may indicate that the measurement result of the UE meets or does not meet a threshold. If the measurement result meets the threshold, for example, is greater than or equal to the threshold, or the measurement result does not meet the threshold, for example, is less than the threshold, the fourth information may indicate that the measurement result of the UE is greater than or equal to the threshold, or indicate that the measurement result of the UE is less than the threshold.

The measurement result of the UE in the third information may be the same as or different from the measurement result of the UE in the first information. Time at which the UE obtains the measurement result in the third information may be earlier than time at which the UE obtains the measurement result in the first information. Correspondingly, the result indicated by the second information may be the same as or different from the result indicated by the fourth information. For more determining processes of the CU, refer to the related descriptions of S301.

Alternatively, in another optional implementation, if the DU determines whether to configure the LP-WUS monitoring by the UE, the CU may send the fourth indication information to the DU, and the DU may determine, based on the fourth indication information, whether to configure the LP-WUS monitoring by the UE. For example, the fourth indication information includes one or more of the following: capability information of the UE, a measurement result of the UE, or fifth information. The DU determines, based on the fourth indication information, whether to configure the LP-WUS monitoring by the UE. A determining manner may be similar to the determining manner of the CU described above, and details are not described again.

An implementation of the third indication information is similar to the implementation of the first indication information. Reference may be made to the descriptions of S301, and details are not described again.

S303: The DU sends first configuration information to the CU. Correspondingly, the CU receives the first configuration information from the DU. For example, the first configuration information may be included in a CellGroupConfig (CellGroupConfig) field in the information sent by the DU to the CU, or may be included in another field.

If this embodiment of this application is applied to Scenario 1, this corresponds to S301 and S303, and S303 may be performed after S301. In this scenario, the activation and the configuration are the same behavior, and the first indication information may indicate the DU to configure and/or activate the LP-WUS monitoring by the UE; or the second indication information may be used to determine whether to configure and/or activate the LP-WUS monitoring by the UE. After receiving the first indication information, the DU may generate the first configuration information, and send the first configuration information to the CU through S303; or after receiving the second indication information, if determining to configure and/or activate the LP-WUS monitoring by the UE, the DU may generate the first configuration information, and send the first configuration information to the CU through S303. The first configuration information may be used to configure and/or activate the LP-WUS monitoring by the UE. In this case, the first configuration information may also be referred to as first activation information, or may also be referred to as configuration activation information, or the like. A name is not limited.

Optionally, in Scenario 1, the method may further include S304: The CU sends sixth information to the UE, and correspondingly, the UE receives the sixth information. For example, S304 is performed after S303. The sixth information may include the first configuration information, and the sixth information may be used to configure and/or activate the LP-WUS monitoring by the UE. For example, if the CU may directly send the first configuration information to the UE, the sixth information and the first configuration information are same information; or if the CU may generate corresponding configuration information, the sixth information may include the configuration information and the first configuration information. The CU may send the sixth information to the DU, and the DU then sends the sixth information to the UE.

Alternatively, if this embodiment of this application is applied to Scenario 2, this corresponds to S301, S302, and S303. For example, S302 is performed before S303, and S303 is performed before S301. In this scenario, the activation and the configuration are the two processes. After receiving the third indication information, the DU may generate the first configuration information, and send the first configuration information to the CU through S303; or after receiving the second indication information, if determining to configure the LP-WUS monitoring by the UE, the DU may generate the first configuration information, and send the first configuration information to the CU through S303. The first configuration information may be used to configure the LP-WUS monitoring by the UE.

Optionally, in Scenario 2, the method may further include S305 and S306.

S305: The CU sends second configuration information to the UE. Correspondingly, the UE receives the second configuration information. For example, S305 is performed after S303.

The second configuration information may include the first configuration information, and the second configuration information may be used to configure the LP-WUS monitoring by the UE. For example, if the CU may directly send the first configuration information to the UE, the second configuration information and the first configuration information are same information; or if the CU may generate corresponding configuration information, the second configuration information may include the configuration information and the first configuration information. The CU may send the second configuration information to the DU, and the DU then sends the second configuration information to the UE.

S306: The DU sends first activation information to the UE, and correspondingly, the UE receives the first activation information, where the first activation information may be used to activate the LP-WUS monitoring by the UE. For example, S306 is performed after S301. When the LP-WUS monitoring by the UE is activated, the DU may directly send activation information (for example, the first activation information) to the UE, in other words, the DU may not need to send the first activation information to the CU, but directly send the first activation information to the UE. This reduces a signaling exchange process between the CU and the DU.

In this embodiment of this application, if the LP-WUS monitoring by the UE is activated, the UE may immediately enter an LP-WUR monitoring period, the UE may immediately switch to the WUR to monitor the LP-WUS, the UE may immediately enable the WUR, or the like.

Optionally, in this embodiment of this application, the LP-WUS monitoring by the UE may alternatively be released (or deconfigured) or deactivated. A manner of releasing the LP-WUS monitoring by the UE may be similar to the manner of configuring the LP-WUS monitoring by the UE, for example, may be decided by the CU or the DU; and a manner of deactivating the LP-WUS monitoring by the UE may be similar to the manner of activating the LP-WUS monitoring by the UE, for example, may be decided by the CU or the DU. Details are not described herein.

In this embodiment of this application, whether to activate the LP-WUS monitoring by the UE may be decided by the CU. If determining to activate the LP-WUS monitoring by the UE, the CU may send the first indication information to the DU, to indicate the DU to activate the LP-WUS monitoring by the UE. Alternatively, whether to activate the LP-WUS monitoring by the UE may be decided by the DU. In this case, the CU may send the second indication information to the DU, and the DU may determine, based on the second indication information, whether to activate the LP-WUS monitoring by the UE. Whether to configure the LP-WUS monitoring by the UE is also implemented in a similar manner. It can be learned that in this embodiment of this application, information exchange can be implemented between the CU and the DU. In this case, the CU and the DU may reach an agreement on whether to configure and/or activate the LP-WUS monitoring by the UE, to configure and/or activate the LP-WUS monitoring by the UE.

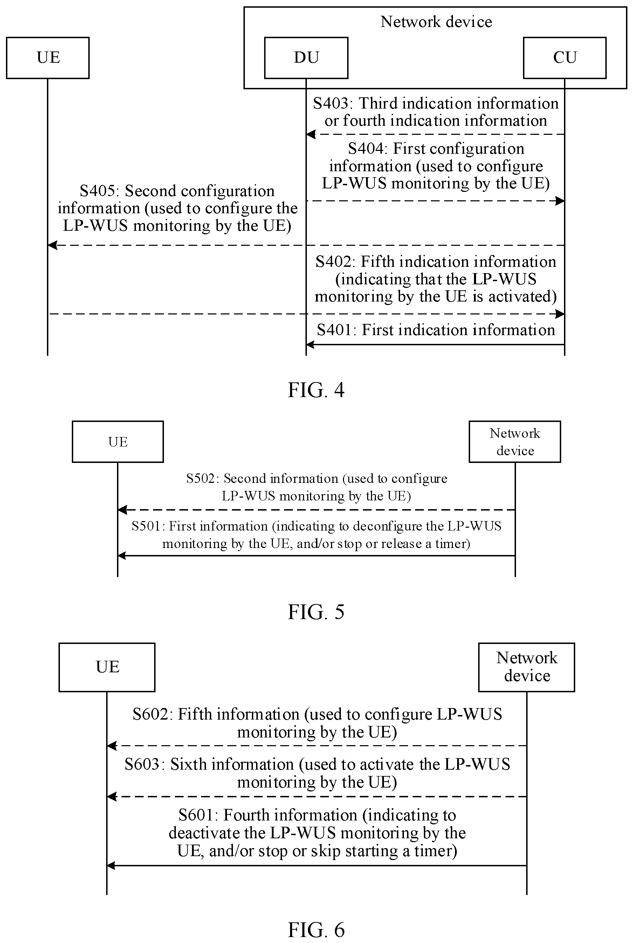

An embodiment of this application provides a second communication method. FIG. 4 is a flowchart of the method. The embodiment shown in FIG. 4 is applicable to Scenario 3. In the embodiment shown in FIG. 4, an example in which a network device includes a CU and a DU is used.

S401: The CU sends first indication information to the DU, and correspondingly, the DU receives the first indication information from the CU. The first indication information may indicate the DU to activate LP-WUS monitoring by a UE, or indicate that the LP-WUS monitoring by the UE is activated.

In Scenario 3, the UE may autonomously determine whether to activate the LP-WUS monitoring by the UE. Optionally, if activating the LP-WUS monitoring by the UE, the UE may send fifth indication information to the CU. For this, refer to S402. For example, S402 is performed before S401. The fifth indication information may indicate that the LP-WUS monitoring by the UE is activated, or indicate that the LP-WUS monitoring by the UE has been activated. The UE may send the fifth indication information to the DU, and the DU then sends the fifth indication information to the CU. Optionally, the fifth indication information may be included in a measurement report, for example, an RRM measurement report, or may be included in other signaling.

For example, the UE may determine, based on capability information of the UE and/or a measurement result of the UE, whether to activate the LP-WUS monitoring by the UE. For the determining manner, refer to the descriptions of the determining manner of the CU in the embodiment shown in FIG. 3. In addition, for an implementation of the fifth indication information, refer to the related descriptions of S301 in the embodiment shown in FIG. 3.

After receiving the fifth indication information, the CU may perform S401, to indicate, to the DU, that the LP-WUS monitoring by the UE is activated.

Optionally, the method may further include S403 to S405, and S403 to S405 are a process in which the network device configures the LP-WUS monitoring by the UE. For example, S403 to S405 may be performed before S402.

S403: The CU sends third indication information to the DU, and correspondingly, the DU receives the third indication information from the CU; or the CU sends fourth indication information to the DU, and correspondingly, the DU receives the fourth indication information from the CU. The third indication information may indicate the DU to configure the LP-WUS monitoring by the UE. The fourth indication information may be used to determine whether to configure the LP-WUS monitoring by the UE.

For more content of S403, refer to S302 in the embodiment shown in FIG. 3.

S404: The DU sends first configuration information to the CU. Correspondingly, the CU receives the first configuration information from the DU. For example, the first configuration information may be included in a CellGroupConfig field in the information sent by the DU to the CU, or may be included in another field. The first configuration information may be used to configure the LP-WUS monitoring by the UE.

S405: The CU sends second configuration information to the UE. Correspondingly, the UE receives the second configuration information.

The second configuration information may include the first configuration information, and the second configuration information may be used to configure the LP-WUS monitoring by the UE. For example, if the CU may directly send the first configuration information to the UE, the second configuration information and the first configuration information are same information; or if the CU may generate corresponding configuration information, the second configuration information may include the configuration information and the first configuration information. The CU may send the second configuration information to the DU, and the DU then sends the second configuration information to the UE. Optionally, the second configuration information may further include a threshold used to compare with the measurement result. The UE may determine, with reference to the measurement result and the threshold, whether to activate the LP-WUS monitoring by the UE.

In this embodiment of this application, if the LP-WUS monitoring by the UE is activated, the UE may immediately enter an LP-WUR monitoring period, the UE may immediately switch to a WUR to monitor an LP-WUS, the UE may immediately enable the WUR, or the like.

Optionally, in this embodiment of this application, the LP-WUS monitoring by the UE may alternatively be deactivated. A manner of deactivating the LP-WUS monitoring by the UE may be similar to the manner of activating the LP-WUS monitoring by the UE, for example, may be decided by the UE. Details are not described herein.

In this embodiment of this application, whether to configure the LP-WUS monitoring by the UE may be decided by the CU. If determining to configure the LP-WUS monitoring by the UE, the CU may send the third indication information to the DU, to indicate the DU to configure the LP-WUS monitoring by the UE. Alternatively, whether to configure the LP-WUS monitoring by the UE may be decided by the DU. In this case, the CU may send the fourth indication information to the DU, and the DU may determine, based on the fourth indication information, whether to configure the LP-WUS monitoring by the UE. It can be learned that in this embodiment of this application, information exchange can be implemented between the CU and the DU. In this case, the CU and the DU may reach an agreement on whether to configure the LP-WUS monitoring by the UE, to configure the LP-WUS monitoring by the UE. In addition, if determining that the UE activates the LP-WUS monitoring by the UE, the CU may alternatively notify the DU, so that the CU, the DU, and the UE can all align a UE behavior.

After the WUR is introduced, in this embodiment of this application, it is considered that some behaviors of the UE have not been determined. Therefore, some working mechanisms of the UE after the WUR is introduced are provided in the following embodiments.

An embodiment of this application provides a third communication method. FIG. 5 is a flowchart of the method. The embodiment shown in FIG. 5 is applicable to Scenario 1.

S501: A network device sends first information. Correspondingly, a UE receives the first information.

The first information may indicate to deconfigure LP-WUS monitoring by the UE, and/or indicates to stop or release a timer. The timer may be used to determine time at which the UE enters an LP-WUS monitoring period. For example, when enabling an MR, the UE may start the timer, or the UE switches from a WUR to the MR to monitor a PDCCH. When the timer expires, the UE may enter the LP-WUS monitoring period, the UE may switch to the WUR to monitor the LP-WUS, the UE may enable the WUR, or the like. When monitoring a signal on the MR, the UE may keep the WUR enabled, or may disable the WUR. If the WUR keeps enabled when the UE monitors the signal on the MR, the UE needs to monitor the LP-WUS on the WUR. In this case, it may be understood that the UE switches to the WUR to monitor the LP-WUS, the UE enters the LP-WUS monitoring period, or the like, that is, the UE does not need to perform a behavior of enabling the WUR; or if the WUR is disabled when the UE monitors the signal on the MR, the UE needs to monitor the LP-WUS on the WUR. In this case, it may be understood that the UE enables the WUR, the UE enables and enters the WUR, the UE enables the WUR to enter the LP-WUS monitoring period, the UE enters the LP-WUS monitoring period, or the like, that is, the UE may perform a behavior of enabling the WUR.

If the first information indicates to deconfigure the LP-WUS monitoring by the UE, but does not indicate to stop or release the timer, after the UE receives the first information, the UE may deconfigure the LP-WUS monitoring, or may autonomously stop or release the timer. Alternatively, if the first information indicates to stop or release the timer, but does not indicate to deconfigure the LP-WUS monitoring by the UE, after the UE receives the first information, based on the indication of the first information, the UE stops or releases the timer, or may autonomously deconfigure the LP-WUS monitoring by the UE. Alternatively, if the first information indicates to deconfigure the LP-WUS monitoring by the UE, and indicates to stop or release the timer, after the UE receives the first information, based on the indication of the first information, the UE may deconfigure the LP-WUS monitoring by the UE, and stop or release the timer. That the UE stops or releases the timer includes, for example, if the timer is currently in a running state (for example, if the UE monitors the signal via the MR before the UE receives the first information, the timer may be in the running state when the UE receives the first information), the UE may stop the timer, or stop and release the timer; or if the timer is currently in an off state (for example, if the UE is in the LP-WUS monitoring period before the UE receives the first information, the timer may be in the off state when the UE receives the first information), the UE may release the timer.

Before receiving the first information, the UE may work on the WUR, or monitor a signal via the WUR; or may work on the MR, or monitor the signal via the MR. The network device can also determine a status of the UE. Optionally, before the UE receives the first information, if the UE monitors the LP-WUS via the WUR, the first information may be included in an LP-WUS, for example, included in a first LP-WUS; and the UE may receive the first LP-WUS via the WUR, to determine to deconfigure the LP-WUS monitoring by the UE. In addition, before receiving the first information, if monitoring the LP-WUS via the WUR, optionally, when receiving the first information or after receiving the first information, the UE may enable the MR based on the first information, to monitor the signal via the MR. Because the UE stops or releases the timer, it indicates that the timer does not expire again. In this case, the UE may always keep monitoring the signal on the MR.

Alternatively, before the UE receives the first information, if the UE monitors the signal via the MR, the first information may be included in an RRC message, or included in a message of another protocol layer; and the UE may receive the first information via the MR, to determine to deconfigure the LP-WUS monitoring by the UE. In addition, before receiving the first information, if monitoring the signal via the MR, optionally, when receiving the first information or after receiving the first information, the UE may keep monitoring the signal via the MR based on the first information, or keep working on the MR. Because the UE stops or releases the timer, it indicates that the timer does not expire again. In this case, the UE may always keep monitoring the signal on the MR.

In this embodiment of this application, if receiving the first information, the UE may deconfigure the LP-WUS monitoring by the UE. Deconfiguring the LP-WUS monitoring by the UE may also be considered as deconfiguring the LP-WUS monitoring performed by the UE via the WUR. That is, the LP-WUS monitoring by the UE may be deconfigured when the first information is received. In this way, the UE may no longer work on the WUR. This is equivalent to providing a mechanism for how the LP-WUS monitoring by the UE is deconfigured. In addition, the timer is used to determine an occasion for the UE to enter the LP-WUS monitoring period. Therefore, if the LP-WUS monitoring by the UE is deconfigured, the UE may further stop and/or release the timer. In this way, the UE no longer enters the LP-WUS monitoring period based on the timer, so that a status of the timer is consistent with a status of the LP-WUS monitoring by the UE.

Optionally, before S501, the method may further include S502: The network device sends second information, and correspondingly, the UE receives the second information. The second information may be used to configure the LP-WUS monitoring by the UE. In this case, the UE may configure the LP-WUS monitoring by the UE based on the second information. Because this embodiment of this application may be applied to Scenario 1, the second information may alternatively be used to activate the LP-WUS monitoring by the UE. For example, the second information may be used to configure and/or activate the LP-WUS monitoring by the UE. After receiving the second information, the UE may activate the LP-WUS monitoring by the UE. Optionally, in this embodiment of this application, that the UE activates the LP-WUS monitoring by the UE may be considered as that the UE activates a function of the LP-WUS monitoring by the UE, but the UE may not immediately switch to the WUR to monitor the LP-WUS, or the UE may not immediately enter the LP-WUS monitoring period.

For example, before receiving the second information, the LP-WUS monitoring by the UE is not configured and activated. Therefore, the UE may monitor the signal via the MR. In this case, optionally, after configuring and/or activating the LP-WUS monitoring by the UE based on the second information, the UE may keep monitoring the signal via the MR, that is, the UE does not immediately enter the LP-WUS monitoring period. For example, before receiving the second information, the UE has an uplink service and/or a downlink service that are/is being executed on the MR. In this case, even if the UE receives the second information, the UE may not immediately enter the LP-WUS monitoring period. This can ensure that the service on the MR continues to be executed, and improve service continuity. In addition, if the UE immediately enters the LP-WUS monitoring period after receiving the second information, because the UE still has a to-be-executed service on the MR, the UE may need to switch to the MR to monitor the signal after entering the LP-WUS monitoring period. Consequently, behavior complexity of the UE is high. However, according to the solution in this embodiment of this application, a process in which the UE switches between the WUR and the MR can be reduced, thereby helping reduce implementation complexity of the UE.

If the UE does not immediately enter the LP-WUS monitoring period after receiving the second information, to meet a monitoring requirement of the UE on the WUR, this embodiment of this application further provides a manner of enabling the UE to enter the LP-WUS monitoring period. Optionally, when receiving third information or after receiving the third information, the UE may enter the LP-WUS monitoring period. The third information may indicate the UE to enter the LP-WUS monitoring period. For example, after the network device sends the second information, the network device may send the third information, and the UE may enter the LP-WUS monitoring period based on the third information.

Alternatively, the UE starts the timer after the UE receives the second information, and the UE may enter the LP-WUS monitoring period when the timer expires. The timer may be used to determine time at which the UE enters the LP-WUS monitoring period. For example, when enabling the MR, the UE may start the timer. When the timer expires, the UE may enter the LP-WUS monitoring period, the UE may switch to the WUR to monitor the LP-WUS, the UE may enable the WUR, or the like.

Optionally, that the UE does not immediately enter the LP-WUS monitoring period after the LP-WUS monitoring by the UE is configured and/or activated may be considered as a mechanism, and the mechanism may be enabled or disabled. For example, the network device may send first indication information to the UE, where the first indication information may indicate the UE to enter the LP-WUS monitoring period after the LP-WUS monitoring by the UE is configured and/or activated. Under the indication, if receiving the first information, the UE may enter the LP-WUS monitoring period, and does not keep monitoring the signal on the MR.

Alternatively, the first indication information may indicate the UE not to enter the LP-WUS monitoring period after the LP-WUS monitoring by the UE is configured and/or activated, indicate the UE not to enter the LP-WUS monitoring period after the LP-WUS monitoring by the UE is configured and/or activated, or indicate the UE to keep monitoring the signal via the MR after the LP-WUS monitoring by the UE is configured and/or activated. Under the indication, if the UE receives the first indication information, the UE may keep monitoring the signal via the MR, and does not enter the LP-WUS monitoring period. Optionally, the first indication information may further indicate the UE to enter the LP-WUS monitoring period when the UE receives information indicating the UE to enter the LP-WUS monitoring period and/or when the timer expires. For example, the first indication information may indicate the UE to keep monitoring the signal via the MR after the LP-WUS monitoring by the UE is configured and/or activated, until the information indicating the UE to enter the LP-WUS monitoring period is received and/or the timer expires. In this case, the UE receives the first indication information, and may keep monitoring the signal via the MR. When the third information is received and/or the timer expires, the UE may enter the LP-WUS monitoring period. Alternatively, the first indication information may not indicate the UE to enter the LP-WUS monitoring period when the UE receives the information indicating the UE to enter the LP-WUS monitoring period and/or when the timer expires. The behavior may be predefined in a protocol or a default behavior of the UE. That is, the UE may enter the LP-WUS monitoring period when the information indicating the UE to enter the LP-WUS monitoring period is received and/or when the timer expires, provided that the UE keeps monitoring the signal on the MR after the LP-WUS monitoring by the UE is configured and/or activated.

According to the foregoing mechanism, the UE can enter the LP-WUS monitoring period, and a requirement of the UE for monitoring the LP-WUS is also met; and the UE may not need to immediately enter the LP-WUS monitoring period when the LP-WUS monitoring by the UE is activated, to meet the monitoring requirement of the UE on the MR.

This embodiment of this application provides a mechanism for how the LP-WUS monitoring by the UE is deconfigured. When the LP-WUS monitoring by the UE is deconfigured, this embodiment of this application further provides a processing manner for the timer. For example, in addition to deconfiguring the LP-WUS monitoring by the UE, the UE may further stop and/or release the timer. In this way, the UE no longer enters the LP-WUS monitoring period based on the timer, so that the status of the timer is consistent with the status of the LP-WUS monitoring by the UE.

An embodiment of this application provides a fourth communication method. FIG. 6 is a flowchart of the method. The embodiment shown in FIG. 6 is applicable to Scenario 2.

S601: A network device sends fourth information. Correspondingly, a UE receives the fourth information.

The fourth information may indicate to deactivate LP-WUS monitoring by the UE, and/or indicate to stop or skip starting a timer. The timer may be used to determine time at which the UE enters an LP-WUS monitoring period. For example, when enabling an MR, the UE may start the timer. When the timer expires, the UE may enter the LP-WUS monitoring period, the UE may switch to a WUR to monitor an LP-WUS, the UE may enable the WUR, or the like. When monitoring a signal on the MR, the UE may keep the WUR enabled, or may disable the WUR. If the WUR keeps enabled when the UE monitors the signal on the MR, the UE needs to monitor the LP-WUS on the WUR. In this case, it may be understood that the UE switches to the WUR to monitor the LP-WUS, the UE enters the LP-WUS monitoring period, or the like, that is, the UE does not need to perform a behavior of enabling the WUR; or if the WUR is disabled when the UE monitors the signal on the MR, the UE needs to monitor the LP-WUS on the WUR. In this case, it may be understood that the UE enables the WUR, the UE enables and enters the WUR, the UE enables the WUR to enter the LP-WUS monitoring period, the UE enters the LP-WUS monitoring period, or the like, that is, the UE may perform a behavior of enabling the WUR.

If the fourth information indicates to deactivate the LP-WUS monitoring by the UE, but does not indicate to stop or skip starting a timer, after the UE receives the fourth information, the UE may deactivate the LP-WUS monitoring, or may autonomously stop or skip starting a timer. Alternatively, if the fourth information indicates to stop or skip starting a timer, but does not indicate to deactivate the LP-WUS monitoring by the UE, after the UE receives the fourth information, based on the indication of the fourth information, the UE stops or skips starting a timer, or may autonomously deactivate the LP-WUS monitoring by the UE. Alternatively, if the fourth information indicates to deactivate the LP-WUS monitoring by the UE, and indicates to stop or skip starting a timer, after the UE receives the fourth information, based on the indication of the fourth information, the UE may deactivate the LP-WUS monitoring by the UE, and stop or skip starting a timer. That the UE stops or skips starting a timer includes, for example, if the timer is currently in a running state (for example, if the UE monitors the signal via the MR before the UE receives the fourth information, the timer may be in the running state when the UE receives the fourth information), the UE may stop the timer, so that the timer enters a stopped state, and optionally, the UE may reset and stop the timer; or if the timer is currently in an off state (for example, if the UE is in the LP-WUS monitoring period before the UE receives the fourth information, the timer may be in the off state when the UE receives the fourth information), the UE may skip starting a timer, so that the timer keeps off.

Before receiving the fourth information, the UE may work on the WUR, or monitor a signal via the WUR; or may work on the MR, or monitor the signal via the MR. The network device can also determine a status of the UE. Optionally, before the UE receives the fourth information, if the UE monitors the LP-WUS via the WUR, the fourth information may be included in an LP-WUS, for example, included in a first LP-WUS; and the UE may receive the first LP-WUS via the WUR, to determine to deactivate the LP-WUS monitoring by the UE. In addition, before receiving the fourth information, if monitoring the LP-WUS via the WUR, optionally, when receiving the fourth information or after receiving the fourth information, the UE may enable the MR based on the fourth information, to monitor the signal via the MR. Because the UE stops or skips starting a timer, it indicates that the timer does not expire again. In this case, the UE may always keep monitoring the signal on the MR.

Alternatively, before the UE receives the fourth information, if the UE monitors the signal via the MR, the fourth information may be included in an RRC message, or included in a message of another protocol layer; and the UE may receive the fourth information via the MR, to determine to deactivate the LP-WUS monitoring by the UE. In addition, before receiving the fourth information, if monitoring the signal via the MR, optionally, when receiving the fourth information or after receiving the fourth information, the UE may keep monitoring the signal via the MR based on the fourth information, or keep working on the MR. Because the UE stops or skips starting a timer, it indicates that the timer does not expire again. In this case, the UE may always keep monitoring the signal on the MR.

In this embodiment of this application, if receiving the fourth information, the UE may deactivate the LP-WUS monitoring by the UE. Deactivating the LP-WUS monitoring by the UE may also be considered as deactivating the LP-WUS monitoring performed by the UE via the WUR. That is, the LP-WUS monitoring by the UE may be deactivated when the fourth information is received. In this way, the UE may not work on the WUR. This is equivalent to providing a mechanism for how the LP-WUS monitoring by the UE is deactivated. In addition, the timer is used to determine an occasion for the UE to enter the LP-WUS monitoring period. Therefore, if the LP-WUS monitoring by the UE is deactivated, the UE may further stop and/or skip starting a timer. In this way, the UE may not enter the LP-WUS monitoring period based on the timer, so that a status of the timer is consistent with a status of the LP-WUS monitoring by the UE.

Optionally, before S601, the method may further include S602 and S603. S602 and S603 are a process in which the network device configures the LP-WUS monitoring by the UE, and the network device indicates to activate the LP-WUS monitoring by the UE.

S602: The network device sends fifth information. Correspondingly, the UE receives the fifth information. The fifth information is, for example, an RRC message, or may be a message of another protocol layer.

The fifth information may be used to configure the LP-WUS monitoring by the UE. In this case, the UE may configure the LP-WUS monitoring by the UE based on the fifth information.

S603: The network device sends sixth information. Correspondingly, the UE receives the sixth information. The sixth information is, for example, a layer 1 message or a layer 2 message, or may be a message of another protocol layer.

The sixth information may be used to activate the LP-WUS monitoring by the UE. In this case, the UE may activate the LP-WUS monitoring by the UE based on the sixth information.

Optionally, in this embodiment of this application, that the UE activates the LP-WUS monitoring by the UE may be considered as that the UE activates a function of the LP-WUS monitoring by the UE, but the UE may not immediately switch to the WUR to monitor the LP-WUS, or the UE may not immediately enter the LP-WUS monitoring period.

For example, before the sixth information is received, the LP-WUS monitoring by the UE is not activated. Therefore, the UE may monitor the signal via the MR. In this case, optionally, after activating the LP-WUS monitoring by the UE based on the sixth information, the UE may keep monitoring the signal via the MR, that is, the UE does not immediately enter the LP-WUS monitoring period. For this, refer to the related descriptions of the embodiment shown in FIG. 5.

If the UE does not immediately enter the LP-WUS monitoring period after receiving the sixth information, to meet a monitoring requirement of the UE on the WUR, this embodiment of this application further provides a manner of enabling the UE to enter the LP-WUS monitoring period. Optionally, when receiving third information or after receiving the third information, the UE may enter the LP-WUS monitoring period. The third information may indicate the UE to enter the LP-WUS monitoring period. For example, after the network device sends the sixth information, the network device may send the third information, and the UE may enter the LP-WUS monitoring period based on the third information.

Alternatively, the UE starts the timer after the UE receives the sixth information, and the UE may enter the LP-WUS monitoring period when the timer expires. The timer may be used to determine time at which the UE enters the LP-WUS monitoring period. For example, when enabling the MR, the UE may start the timer. When the timer expires, the UE may enter the LP-WUS monitoring period, the UE may switch to the WUR to monitor the LP-WUS, the UE may enable the WUR, or the like.

Optionally, that the UE does not immediately enter the LP-WUS monitoring period after the LP-WUS monitoring by the UE is configured and/or activated may be considered as a mechanism, and the mechanism may be enabled or disabled. For example, the network device may send first indication information to the UE, where the first indication information may indicate the UE to enter the LP-WUS monitoring period after the LP-WUS monitoring by the UE is activated. Under the indication, if receiving the first information, the UE may enter the LP-WUS monitoring period, and does not keep monitoring the signal on the MR.

Alternatively, the first indication information may indicate the UE not to enter the LP-WUS monitoring period after the LP-WUS monitoring by the UE is activated, indicate the UE not to enter the LP-WUS monitoring period after the LP-WUS monitoring by the UE is activated, or indicate the UE to keep monitoring the signal via the MR after the LP-WUS monitoring by the UE is activated. Under the indication, if the UE receives the first indication information, the UE may keep monitoring the signal via the MR, and does not enter the LP-WUS monitoring period. Optionally, the first indication information may further indicate the UE to enter the LP-WUS monitoring period when the UE receives information indicating the UE to enter the LP-WUS monitoring period and/or when the timer expires. For example, the first indication information may indicate the UE to keep monitoring the signal via the MR after the LP-WUS monitoring by the UE is activated, until the information indicating the UE to enter the LP-WUS monitoring period is received and/or the timer expires. In this case, the UE receives the first indication information, and may keep monitoring the signal via the MR. When the third information is received and/or the timer expires, the UE may enter the LP-WUS monitoring period. Alternatively, the first indication information may not indicate the UE to enter the LP-WUS monitoring period when the UE receives the information indicating the UE to enter the LP-WUS monitoring period and/or when the timer expires. The behavior may be predefined in a protocol or a default behavior of the UE. That is, the UE may enter the LP-WUS monitoring period when the information indicating the UE to enter the LP-WUS monitoring period is received and/or when the timer expires, provided that the UE keeps monitoring the signal on the MR after the LP-WUS monitoring by the UE is activated.

According to the foregoing mechanism, the UE can enter the LP-WUS monitoring period, and a requirement of the UE for monitoring the LP-WUS is also met; and the UE may not need to immediately enter the LP-WUS monitoring period when the LP-WUS monitoring by the UE is activated, to meet the monitoring requirement of the UE on the MR.

This embodiment of this application provides a mechanism for how the LP-WUS monitoring by the UE is deactivated. When the LP-WUS monitoring by the UE is deactivated, this embodiment of this application further provides a processing manner for the timer. For example, in addition to deactivating the LP-WUS monitoring by the UE, the UE may further stop and/or skip starting a timer. In this way, the UE may not enter the LP-WUS monitoring period based on the timer, so that a status of the timer is consistent with a status of the LP-WUS monitoring by the UE.

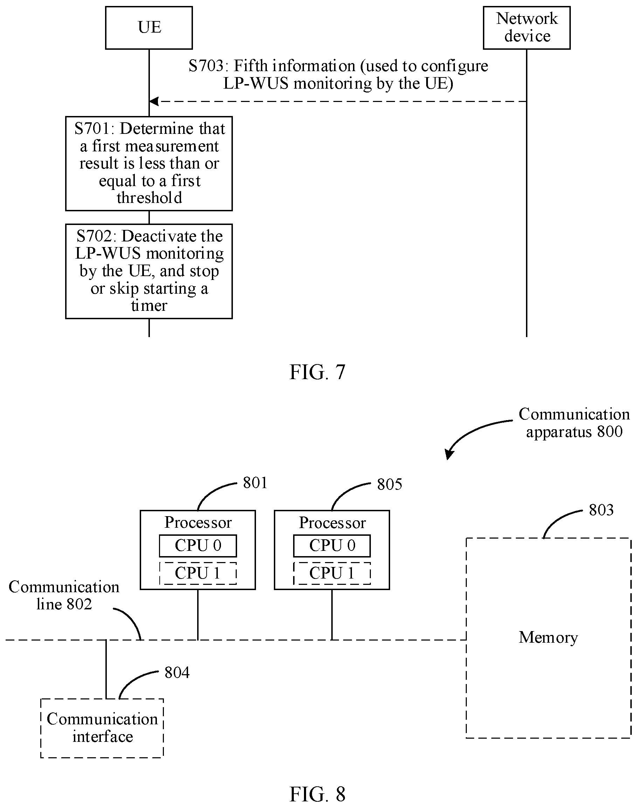

An embodiment of this application provides a fourth communication method. FIG. 7 is a flowchart of the method. The embodiment shown in FIG. 7 is applicable to Scenario 3.

S701: A UE determines that a first measurement result is less than or equal to a first threshold. The first measurement result is a measurement result of the UE.

For example, the UE may perform measurement on a received downlink signal, for example, perform RRM measurement, to obtain the first measurement result, and the UE may determine a value relationship between the first measurement result and the first threshold. The downlink signal includes, for example, a downlink signal (for example, a signal modulated through OOK) received via a WUR and/or a downlink signal (for example, an SSB and/or a CSI-RS) received via an MR. The first measurement result may include a measurement result corresponding to the WUR, and/or include a measurement result corresponding to the MR. For more descriptions of the measurement result, refer to S301 in the embodiment shown in FIG. 3.

S702: The UE deactivates LP-WUS monitoring by the UE, and stops or skips starting a timer.

The timer may be used to determine time at which the UE enters an LP-WUS monitoring period. For example, when enabling the MR, the UE may start the timer. When the timer expires, the UE may enter the LP-WUS monitoring period, the UE may switch to the WUR to monitor an LP-WUS, the UE may enable the WUR, or the like. When monitoring a signal on the MR, the UE may keep the WUR enabled, or may disable the WUR. If the WUR keeps enabled when the UE monitors the signal on the MR, the UE needs to monitor the LP-WUS on the WUR. In this case, it may be understood that the UE switches to the WUR to monitor the LP-WUS, the UE enters the LP-WUS monitoring period, or the like, that is, the UE does not need to perform a behavior of enabling the WUR; or if the WUR is disabled when the UE monitors the signal on the MR, the UE needs to monitor the LP-WUS on the WUR. In this case, it may be understood that the UE enables the WUR, the UE enables and enters the WUR, the UE enables the WUR to enter the LP-WUS monitoring period, the UE enters the LP-WUS monitoring period, or the like, that is, the UE may perform a behavior of enabling the WUR.

In this embodiment of this application, the UE autonomously decides whether to deactivate the LP-WUS monitoring by the UE, without an indication of a network device, so that deactivation behavior efficiency is higher. When the UE determines that the first measurement result is less than or equal to the first threshold, if the timer is currently in a running state (for example, if the UE monitors a signal via the MR before the UE determines that the first measurement result is less than or equal to the first threshold, the timer may be in the running state when the UE determines that the first measurement result is less than or equal to the first threshold), the UE may stop the timer, so that the timer enters a stopped state. Optionally, the UE may reset and stop the timer. Alternatively, if the timer is currently in an off state (for example, if the UE is in an LP-WUS monitoring period before the UE determines that the first measurement result is less than or equal to the first threshold, the timer may be in the off state when the UE determines that the first measurement result is less than or equal to the first threshold), the UE may skip starting a timer, so that the timer keeps off.

Before determining that the first measurement result is less than or equal to the first threshold, the UE may work on the WUR, or monitor a signal via the WUR; or may work on the MR, or monitor the signal via the MR. The network device can also determine a status of the UE. Optionally, before the UE determines that the first measurement result is less than or equal to the first threshold, if the UE monitors the LP-WUS via the WUR, optionally, when the UE determines that the first measurement result is less than or equal to the first threshold or after the UE determines that the first measurement result is less than or equal to the first threshold, the UE may enable the MR, to monitor the signal via the MR. Because the UE stops or skips starting a timer, it indicates that the timer does not expire again. In this case, the UE may always keep monitoring the signal on the MR.

Alternatively, before the UE determines that the first measurement result is less than or equal to the first threshold, if the UE monitors the signal via the MR, optionally, when the UE determines that the first measurement result is less than or equal to the first threshold or after the UE determines that the first measurement result is less than or equal to the first threshold, the UE may keep monitoring the signal via the MR, or keep working on the MR. Because the UE stops or skips starting a timer, it indicates that the timer does not expire again. In this case, the UE may always keep monitoring the signal on the MR.

If the UE deactivates the LP-WUS monitoring by the UE, optionally, the UE may send seventh information to the network device, where the seventh information may indicate that the LP-WUS monitoring by the UE is deactivated, so that the network device can determine a status of the UE.

In this embodiment of this application, if determining that the first measurement result is less than or equal to the first threshold, the UE may deactivate the LP-WUS monitoring by the UE. Deactivating the LP-WUS monitoring by the UE may also be considered as deactivating the LP-WUS monitoring performed by the UE via the WUR. That is, the LP-WUS monitoring by the UE may be deactivated when it is determined that the first measurement result is less than or equal to the first threshold. In this way, the UE may not work on the WUR. This is equivalent to providing a mechanism for how the LP-WUS monitoring by the UE is deactivated. In addition, the timer is used to determine an occasion for the UE to enter the LP-WUS monitoring period. Therefore, if the LP-WUS monitoring by the UE is deactivated, the UE may further stop and/or skip starting a timer. In this way, the UE may not enter the LP-WUS monitoring period based on the timer, so that a status of the timer is consistent with a status of the LP-WUS monitoring by the UE.

The foregoing describes a manner in which the UE deactivates the LP-WUS monitoring by the UE. Before being deactivated, the LP-WUS monitoring by the UE may be first activated. Therefore, optionally, before S701, the method may further include S703: The network device sends fifth information to the UE, and correspondingly, the UE receives the fifth information. The fifth information may be used to configure the LP-WUS monitoring by the UE. In this case, the UE may configure the LP-WUS monitoring by the UE based on the fifth information. Optionally, the fifth information may further include the first threshold used to compare with the measurement result, or the first threshold may be predefined in a protocol or preconfigured in the UE. In this case, the UE may perform determining with reference to the first measurement result and the first threshold in S701.

After the UE receives the fifth information, only the LP-WUS monitoring by the UE is configured, but the LP-WUS monitoring by the UE may not be activated. Optionally, the UE may determine, with reference to a measurement result and a corresponding threshold, whether to activate the LP-WUS monitoring by the UE. For example, the UE may obtain a second measurement result through measurement, and if the second measurement result is greater than or equal to a second threshold, the UE may activate the LP-WUS monitoring by the UE; or if the second measurement result is less than a second threshold, the UE may not activate the LP-WUS monitoring by the UE. Optionally, the second threshold may be configured by using the fifth information, or may be predefined in a protocol or preconfigured in the UE. For example, the UE may perform measurement on a received downlink signal, for example, perform RRM measurement, to obtain the second measurement result, and the UE may determine a value relationship between the second measurement result and the second threshold. The downlink signal includes, for example, a downlink signal (for example, a signal modulated through OOK) received via the WUR and/or a downlink signal (for example, an SSB and/or a CSI-RS) received via the MR. The second measurement result may include a measurement result corresponding to the WUR, and/or include a measurement result corresponding to the MR. For more descriptions of the measurement result, refer to S301 in the embodiment shown in FIG. 3. The first measurement result and the second measurement result are completely the same, partially the same, or completely different.

If the UE activates the LP-WUS monitoring by the UE, optionally, the UE may send eighth information to the network device, where the eighth information may indicate that the LP-WUS monitoring by the UE is activated, so that the network device can determine a status of the UE.

Optionally, in this embodiment of this application, that the UE activates the LP-WUS monitoring by the UE may be considered as that the UE activates a function of the LP-WUS monitoring by the UE, but the UE may not immediately switch to the WUR to monitor the LP-WUS, or the UE may not immediately enter the LP-WUS monitoring period.

For example, before the LP-WUS monitoring by the UE is activated, the UE may monitor a signal via the MR. In this case, optionally, after activating the LP-WUS monitoring by the UE, the UE may keep monitoring the signal via the MR, that is, the UE does not immediately enter the LP-WUS monitoring period. For this, refer to the related descriptions of the embodiment shown in FIG. 5.

If the UE does not immediately enter the LP-WUS monitoring period after activating the LP-WUS monitoring by the UE, to meet a monitoring requirement of the UE on the WUR, this embodiment of this application further provides a manner of enabling the UE to enter the LP-WUS monitoring period. Optionally, when receiving third information or after receiving the third information, the UE may enter the LP-WUS monitoring period. The third information may indicate the UE to enter the LP-WUS monitoring period. For example, the network device may determine whether the UE enters the LP-WUS monitoring period. If the network device considers that the UE can enter the LP-WUS monitoring period, the network device may send the third information, and the UE may enter the LP-WUS monitoring period based on the third information.

Alternatively, after the UE activates the LP-WUS monitoring by the UE, the UE may enter the LP-WUS monitoring period when the timer expires. The timer may be used to determine time at which the UE enters the LP-WUS monitoring period. For example, when enabling the MR, the UE may start the timer. When the timer expires, the UE may enter the LP-WUS monitoring period, the UE may switch to the WUR to monitor the LP-WUS, the UE may enable the WUR, or the like.

Optionally, that the UE does not immediately enter the LP-WUS monitoring period after the LP-WUS monitoring by the UE is configured and/or activated may be considered as a mechanism, and the mechanism may be enabled or disabled. For example, the network device may send first indication information to the UE, where the first indication information may indicate the UE to enter the LP-WUS monitoring period after the LP-WUS monitoring by the UE is activated; or the first indication information may indicate the UE not to enter the LP-WUS monitoring period after the LP-WUS monitoring by the UE is activated, indicate the UE not to enter the LP-WUS monitoring period after the LP-WUS monitoring by the UE is activated, or indicate the UE to keep monitoring the signal via the MR after the LP-WUS monitoring by the UE is activated. For this part of content, refer to the related descriptions of the embodiment shown in FIG. 6.

According to the foregoing mechanism, the UE can enter the LP-WUS monitoring period, and a requirement of the UE for monitoring the LP-WUS is also met; and the UE may not need to immediately enter the LP-WUS monitoring period when the LP-WUS monitoring by the UE is activated, to meet the monitoring requirement of the UE on the MR.

This embodiment of this application provides a mechanism for how the LP-WUS monitoring by the UE is deactivated. When the LP-WUS monitoring by the UE is deactivated, this embodiment of this application further provides a processing manner for the timer. For example, in addition to deactivating the LP-WUS monitoring by the UE, the UE may further stop and/or skip starting a timer. In this way, the UE may not enter the LP-WUS monitoring period based on the timer, so that a status of the timer is consistent with a status of the LP-WUS monitoring by the UE.

The embodiments described above may be separately applied, or a part or all of the embodiments may be applied in combination. For example, the embodiment shown in FIG. 3 and the embodiment shown in FIG. 5 may be applied in combination. After the combination, the network device in the embodiment shown in FIG. 5 may use a distributed architecture. For example, in the embodiment shown in FIG. 5, that the network device sends the first information may be specifically that the CU sends the first information after the CU interacts with the DU. For an interaction process, refer to the embodiment shown in FIG. 3. In addition/alternatively, that the network device sends the second information may be that the CU sends the second information after the CU interacts with the DU. Alternatively, after the combination, in the embodiment shown in FIG. 3, if the LP-WUS monitoring by the UE is deactivated, for a behavior of the UE, refer to the embodiment shown in FIG. 5.

Alternatively, the embodiment shown in FIG. 3 and the embodiment shown in FIG. 6 may be applied in combination. After the combination, the network device in the embodiment shown in FIG. 6 may use a distributed architecture. For example, in the embodiment shown in FIG. 6, that the network device sends the fourth information may be specifically that the DU sends the fourth information after the CU interacts with the DU. For an interaction process, refer to the embodiment shown in FIG. 3. In addition/alternatively, that the network device sends the fifth information may be that the CU sends the fifth information after the CU interacts with the DU. For an interaction process, refer to the embodiment shown in FIG. 3. In addition/alternatively, that the network device sends the sixth information may be that the DU sends the sixth information after the CU interacts with the DU. For an interaction process, refer to the embodiment shown in FIG. 3. Alternatively, after the combination, in the embodiment shown in FIG. 3, if the LP-WUS monitoring by the UE is deactivated, for a behavior of the UE, refer to the embodiment shown in FIG. 6.

Alternatively, the embodiment shown in FIG. 4 and the embodiment shown in FIG. 7 may be applied in combination. After the combination, the network device in the embodiment shown in FIG. 7 may use a distributed architecture. For example, in the embodiment shown in FIG. 7, that the network device sends the fourth information may be specifically that the CU sends the fifth information after the CU interacts with the DU. For an interaction process, refer to the embodiment shown in FIG. 4. Alternatively, after the combination, in the embodiment shown in FIG. 4, if the LP-WUS monitoring by the UE is deactivated, for a behavior of the UE, refer to the embodiment shown in FIG. 7.

FIG. 8 is a diagram of a structure of a communication apparatus according to an embodiment of this application. The communication apparatus 800 may be the CU in the embodiment shown in either FIG. 3 or FIG. 4 or a circuit system of the CU, and is configured to implement the method corresponding to the CU in the foregoing method embodiments. Alternatively, the communication apparatus 800 may be the DU in the embodiment shown in either FIG. 3 or FIG. 4 or a circuit system of the DU, and is configured to implement the method corresponding to the DU in the foregoing method embodiments. Alternatively, the communication apparatus 800 may be the UE in the embodiment shown in any one of FIG. 5 to FIG. 7 or a circuit system of the UE, and is configured to implement the method corresponding to the UE in the foregoing method embodiments. Alternatively, the communication apparatus 800 may be the network device in the embodiment shown in any one of FIG. 5 to FIG. 7 or a circuit system of the network device, and is configured to implement the method corresponding to the network device in the foregoing method embodiments. For example, a circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent devices, may be located at different physical locations, or may be located on different integrated circuits. Optionally, different processors may be integrated into one or more processors, for example, integrated into one or more integrated circuits.

Optionally, the communication apparatus 800 includes one or more memories 803, configured to store instructions. Optionally, the memory 803 may further store data. The processor and the memory may be separately disposed, or may be integrated together.

Optionally, the communication apparatus 800 includes a communication line 802 and at least one communication interface 804. The memory 803, the communication line 802, and the communication interface 804 are all optional, and therefore are represented by dashed lines in FIG. 8.

Optionally, the communication apparatus 800 may further include a transceiver and/or an antenna. The transceiver may be configured to send information to another apparatus or receive information from another apparatus. The transceiver may be referred to as a transceiver device, a transceiver circuit, an input/output interface, or the like, and is configured to implement a transceiver function of the communication apparatus 800 via an antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 801 may include a general-purpose central processing unit (central processing unit, CPU), a microprocessor, an application-specific integrated circuit (application-specific integrated circuit, ASIC), or one or more integrated circuits that are configured to control program execution in the solutions of this application.

The communication line 802 may include a path for information transmission between the foregoing components.

The communication interface 804 uses any apparatus like a transceiver, and is configured to communicate with another device or a communication network, for example, the Ethernet, a radio access network (radio access network, RAN), a wireless local area network (wireless local area network, WLAN), or a wired access network.

The memory 803 may be a read-only memory (read-only memory, ROM) or another type of static storage device that can store static information and instructions, or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital versatile disc, a Blu-ray disc, or the like), a magnetic disk storage medium or another magnetic storage device, or any other medium that can be configured to: carry or store expected program code in a form of instructions or a data structure and that can be accessed by a computer, but is not limited thereto. The memory 803 may exist independently, and is connected to the processor 801 via the communication line 802. Alternatively, the memory 803 and the processor 801 may be integrated together.

The memory 803 is configured to store computer-executable instructions for executing the solutions of this application, and the processor 801 controls the execution. The processor 801 is configured to execute the computer-executable instructions stored in the memory 803, to implement one or more of the following: the steps performed by the CU in the embodiment shown in either FIG. 3 or FIG. 4, the steps performed by the DU in the embodiment shown in either FIG. 3 or FIG. 4, the steps performed by the UE in the embodiment shown in any one of FIG. 5 to FIG. 7, or the steps performed by the network device in the embodiment shown in any one of FIG. 5 to FIG. 7.

Optionally, the computer-executable instructions in this embodiment of this application may also be referred to as application program code. This is not specifically limited in this embodiment of this application.

During specific implementation, in an embodiment, the processor 801 may include one or more CPUs, for example, a CPU 0 and a CPU 1 in FIG. 8.

During specific implementation, in an embodiment, the communication apparatus 800 may include a plurality of processors, for example, the processor 801 and a processor 805 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 8 is a chip, for example, a chip in the CU, a chip in the DU, a chip in the UE, or a chip in the network device, the chip includes a processor 801 (and may further include a processor 805), a communication line 802, and a communication interface 804. Optionally, the apparatus may include a memory 803. Specifically, the communication interface 804 may be an input interface, a pin, a circuit, or the like. The memory 803 may be a register, a cache, or the like. The processor 801 and the processor 805 may be a general-purpose CPU, a microprocessor, an ASIC, or one or more integrated circuits configured to control program execution of the communication method in any one of the foregoing embodiments.

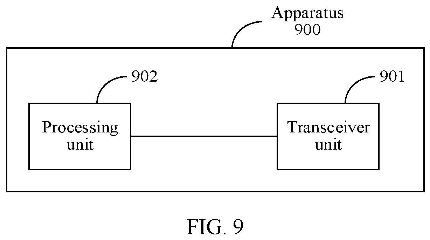

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 9 is a diagram of an apparatus. The apparatus 900 may be the CU, the DU, the UE, or the network device in the foregoing method embodiments, a chip in the CU, a chip in the DU, a chip in the UE, or a chip in the network device. The apparatus 900 includes a processing unit 902 and a transceiver unit 901.

It should be understood that the apparatus 900 may be configured to implement the steps performed by the CU, the DU, the UE, and/or the network device in the communication method in embodiments of this application. For related features, refer to the embodiment shown in any one of FIG. 3 to FIG. 7. Details are not described herein again.

Optionally, functions/implementation processes of the transceiver unit 901 and the processing unit 902 in FIG. 9 may be implemented by the processor 801 in FIG. 8 by invoking the computer-executable instructions stored in the memory 803. Alternatively, functions/implementation processes of the processing unit 902 in FIG. 9 may be implemented by the processor 801 in FIG. 8 by invoking the computer-executable instructions stored in the memory 803, and functions/implementation processes of the transceiver unit 901 in FIG. 9 may be implemented by the communication interface 804 in FIG. 8.

Optionally, when the apparatus 900 is a chip or a circuit, functions/implementation processes of the transceiver unit 901 may alternatively be implemented by using a pin, a circuit, or the like. Optionally, the transceiver unit 901 may include a sending unit and/or a receiving unit, where the sending unit is configured to implement a sending function, and the receiving unit is configured to implement a receiving function; or the transceiver unit 901 may be an integral module that can implement a sending function and/or a receiving function. Optionally, the transceiver unit 901 may be implemented by a transceiver.

This application further provides a computer-readable storage medium. The computer-readable storage medium stores a computer program or instructions. When the computer program or the instructions are run, the method performed by the CU, the DU, the UE, and/or the network device in the foregoing method embodiments is implemented. In this way, the functions in the foregoing embodiments may be implemented in a form of a software functional unit and sold or used as an independent product. Based on such an understanding, the technical solutions of this application essentially, or the part making contributions, or a part of the technical solutions may be implemented in a form of a software product. The computer software product is stored in a storage medium, and includes several instructions for instructing a computer device (which may be a personal computer, a server, a network device, or the like) to perform all or a part of the steps in the methods described in embodiments of this application. The storage medium includes any medium that can store program code, such as a USB flash drive, a removable hard disk drive, a ROM, a RAM, a magnetic disk, or an optical disc.

This application further provides a computer program product. The computer program product includes computer program code. When the computer program code is run on a computer, the computer is caused to perform the method performed by the CU, the DU, the UE, and/or the network device in any one of the foregoing method embodiments.

An embodiment of this application further provides a processing apparatus, including a processor and an interface. The processor is configured to perform the method performed by the CU, the DU, the UE, and/or the network device in any one of the foregoing method embodiments.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive, (solid-state drive, SSD)), or the like.

Various illustrative logic units and circuits described in embodiments of this application may implement or operate the described functions by a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may also be any conventional processor, controller, microcontroller, or state machine. The processor may alternatively be implemented by a combination of computing apparatuses, such as a digital signal processor and a microprocessor, a plurality of microprocessors, one or more microprocessors in combination with a digital signal processor core, or any other similar configuration.

Steps in the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor, so that the processor can read information from the storage medium and write information into the storage medium. Optionally, the storage medium may be integrated into a processor. The processor and the storage medium may be disposed in an ASIC, and the ASIC may be disposed in a terminal device. Optionally, the processor and the storage medium may alternatively be disposed in different components of a terminal device.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Mutual reference may be made to content in embodiments of this application. Unless otherwise specified or there is a logic conflict, terms and/or descriptions in different embodiments are consistent and may be mutually referenced, and technical features in different embodiments can be combined based on an internal logical relationship thereof, to form a new embodiment.

It may be understood that in embodiments of this application, the CU, the DU, the UE, and/or the network device may perform some or all steps in embodiments of this application. The steps or operations are merely examples. In embodiments of this application, other operations or variations of various operations may be further included. In addition, the steps may be performed in a sequence different from a sequence presented in embodiments of this application, and not all the operations in embodiments of this application may be necessarily performed.

## Claims

1. A communication method, wherein the method comprises:
sending first indication information or second indication information to a distributed unit, wherein the first indication information indicates the distributed unit to activate low-power wake-up signal LP-WUS monitoring by a terminal device, and the second indication information is used to determine whether to activate the LP-WUS monitoring by the terminal device.

2. The method according to claim 1, wherein the method further comprises:
determining the first indication information based on capability information of the terminal device and/or a measurement result of the terminal device.

3. The method according to claim 1, wherein the second indication information comprises capability information of the terminal device and/or a measurement result of the terminal device.

4. The method according to any one of claims 1 to 3, wherein the method further comprises:
receiving first configuration information from the distributed unit, wherein the first configuration information is used to configure the LP-WUS monitoring by the terminal device; and
sending the first configuration information to the terminal device.

5. The method according to claim 4, wherein the first configuration information is further used to activate the LP-WUS monitoring by the terminal device.

6. The method according to claim 1, wherein the method further comprises:
receiving fifth indication information from the terminal device, wherein the fifth indication information indicates that the LP-WUS monitoring by the terminal device is activated.

7. A communication method, wherein the method comprises:
receiving first indication information or second indication information from a central unit, wherein the first indication information indicates a distributed unit to activate LP-WUS monitoring by a terminal device, and the second indication information is used to determine whether to activate the LP-WUS monitoring by the terminal device.

8. The method according to claim 7, wherein the second indication information comprises capability information of the terminal device and/or a measurement result of the terminal device.

9. The method according to claim 7 or 8, wherein the method further comprises:
sending first configuration information to the central unit, wherein the first configuration information is used to configure the LP-WUS monitoring by the terminal device.

10. The method according to claim 9, wherein the first configuration information is further used to activate the LP-WUS monitoring by the terminal device.

11. The method according to claim 7 or 8, wherein the method further comprises:
sending first activation information to the terminal device, wherein the first activation information is used to activate the LP-WUS monitoring by the terminal device.

12. A communication method, wherein the method comprises:
receiving first information, wherein the first information indicates to deconfigure LP-WUS monitoring by a terminal device, and/or indicates to stop or release a timer, and the timer is used to determine time at which the terminal device enters an LP-WUS monitoring period; and
deconfiguring, based on the first information, the LP-WUS monitoring by the terminal device, and stopping and/or releasing the timer.

13. The method according to claim 12, wherein before receiving the first information, the terminal device monitors an LP-WUS via the WUR, wherein the first information is comprised in a first LP-WUS; or
before receiving the first information, the terminal device monitors a signal via the MR, wherein the first information is comprised in an RRC message.

14. The method according to claim 12 or 13, wherein the MR is enabled based on the first information, wherein before receiving the first information, the terminal device monitors the LP-WUS via the WUR; or
monitoring the signal via the MR is kept based on the first information, wherein before receiving the first information, the terminal device monitors the signal via the MR.

15. The method according to any one of claims 12 to 14, wherein the method further comprises:
receiving second information, wherein the second information is used to configure the LP-WUS monitoring by the terminal device; and configuring the LP-WUS monitoring by the terminal device based on the second information.

16. The method according to any one of claims 12 to 15, wherein the method further comprises:
after the LP-WUS monitoring by the terminal device is configured, keeping monitoring the signal via the MR;
receiving third information and/or the timer expiring, wherein the third information indicates the terminal device to enter the LP-WUS monitoring period; and
entering the LP-WUS monitoring period.

17. The method according to any one of claims 12 to 16, wherein the method further comprises:
receiving first indication information, wherein the first indication information indicates the terminal device to keep monitoring the signal via the MR after the LP-WUS monitoring by the terminal device is configured; or
the first indication information indicates the terminal device to keep monitoring the signal via the MR after the LP-WUS monitoring by the terminal device is configured, until the information indicating the terminal device to enter the LP-WUS monitoring period is received and/or the timer expires.

18. A communication method, wherein the method comprises:
sending first information, wherein the first information indicates to deconfigure LP-WUS monitoring by a terminal device, and/or indicates to stop or release a timer, and the timer is used to determine time at which the terminal device enters an LP-WUS monitoring period.

19. The method according to claim 18, wherein before the first information is sent, the terminal device monitors an LP-WUS via the WUR, wherein the first information is comprised in a first LP-WUS; or
before the first information is sent, the terminal device monitors a signal via the MR, wherein the first information is comprised in an RRC message.

20. The method according to claim 18 or 19, wherein the method further comprises:
sending second information, wherein the second information is used to configure the LP-WUS monitoring by the terminal device.

21. The method according to any one of claims 18 to 20, wherein the method further comprises:
sending first indication information, wherein the first indication information indicates the terminal device to keep monitoring the signal via the MR after the LP-WUS monitoring by the terminal device is configured; or
the first indication information indicates the terminal device to keep monitoring the signal via the MR after the LP-WUS monitoring by the terminal device is configured, until information indicating the terminal device to enter the LP-WUS monitoring period is received and/or the timer expires.

22. A communication method, wherein the method comprises:
receiving fourth information, wherein the fourth information indicates to deactivate LP-WUS monitoring by a terminal device, and/or indicates to stop or skip starting a timer, and the timer is used to determine time at which the terminal device enters an LP-WUS monitoring period; and
deactivating, based on the fourth information, the LP-WUS monitoring by the terminal device, and stopping or skipping starting the timer.

23. The method according to claim 22, wherein
before receiving the fourth information, the terminal device monitors an LP-WUS via a wake-up radio WUR, wherein the fourth information is comprised in a first LP-WUS; or
before receiving the fourth information, the terminal device monitors a signal via the main radio MR, wherein the fourth information is comprised in a radio resource control RRC message.

24. The method according to claim 22 or 23, wherein the method further comprises:
enabling the MR based on the fourth information, wherein before receiving the fourth information, the terminal device monitors a signal via the WUR; or
keeping monitoring the signal via the MR based on the fourth information, wherein before receiving the fourth information, the terminal device monitors the signal via the MR.

25. The method according to any one of claims 22 to 24, wherein the method further comprises:
receiving fifth information, wherein the fifth information is used to configure the LP-WUS monitoring by the terminal device;
configuring the LP-WUS monitoring by the terminal device based on the fifth information;
receiving sixth information, wherein the sixth information is used to activate the LP-WUS monitoring by the terminal device; and
activating the LP-WUS monitoring by the terminal device based on the sixth information.

26. The method according to claim 25, wherein the method further comprises:
after the LP-WUS monitoring by the terminal device is activated, monitoring the signal via the MR;
receiving third information and/or the timer expiring, wherein the third information indicates the terminal device to enter the LP-WUS monitoring period; and
entering the LP-WUS monitoring period.

27. The method according to claim 26, wherein the method further comprises:
receiving first indication information, wherein the first indication information indicates the terminal device to keep monitoring the signal via the MR after the LP-WUS monitoring by the terminal device is activated.

28. A communication method, wherein the method comprises:
sending fourth information, wherein the fourth information indicates to deactivate LP-WUS monitoring by a terminal device, and/or indicates to stop or skip starting a timer, and the timer is used to determine time at which the terminal device enters an LP-WUS monitoring period.

29. The method according to claim 28, wherein
before the fourth information is sent, the terminal device monitors an LP-WUS via a WUR, wherein the fourth information is comprised in a first LP-WUS; or
before the fourth information is sent, the terminal device monitors a signal via an MR, wherein the fourth information is comprised in an RRC message.

30. The method according to claim 28 or 29, wherein the method further comprises:
sending fifth information, wherein the fifth information is used to configure the LP-WUS monitoring by the terminal device; and
sending sixth information, wherein the sixth information is used to activate the LP-WUS monitoring by the terminal device.

31. The method according to claim 30, wherein the method further comprises:
sending first indication information, wherein the first indication information indicates the terminal device to monitor the signal via the MR after the LP-WUS monitoring by the terminal device is activated.

32. A communication method, wherein the method comprises:
determining that a first measurement result is less than or equal to a first threshold, wherein the first measurement result is a measurement result of a terminal device; and
deactivating LP-WUS monitoring by the terminal device, and stopping or skipping starting a timer, wherein the timer is used to determine time at which the terminal device enters an LP-WUS monitoring period.

33. The method according to claim 32, wherein the method further comprises:
sending seventh information, wherein the seventh information indicates that the LP-WUS monitoring by the terminal device is deactivated.

34. The method according to claim 32 or 33, wherein the method further comprises:
enabling an MR, wherein before determining that the first measurement result is less than or equal to the first threshold, the terminal device monitors an LP-WUS via a WUR; or
keeping monitoring a signal via an MR, wherein before determining that the first measurement result is less than or equal to the first threshold, the terminal device monitors the signal via the MR.

35. The method according to any one of claims 32 to 34, wherein the method further comprises:
receiving fifth information, wherein the fifth information is used to configure the LP-WUS monitoring by the terminal device;
configuring the LP-WUS monitoring by the terminal device based on the fifth information; and
when a second measurement result is greater than or equal to a second threshold, activating the LP-WUS monitoring by the terminal device, wherein the second measurement result is a measurement result of the terminal device.

36. The method according to claim 35, wherein the method further comprises:
after the LP-WUS monitoring by the terminal device is activated, keeping monitoring the signal via the MR;
receiving third information and/or the timer expiring, wherein the third information indicates the terminal device to enter the LP-WUS monitoring period; and
entering the LP-WUS monitoring period.

37. The method according to claim 35 or 36, wherein the method further comprises:
sending eighth information, wherein the eighth information indicates that the LP-WUS monitoring by the terminal device is activated.

38. The method according to any one of claims 32 to 37, wherein the method further comprises:
receiving first indication information, wherein the first indication information indicates the terminal device to keep monitoring the signal via the MR after the LP-WUS monitoring by the terminal device is activated.

39. A communication method, wherein the method comprises:
sending first indication information, wherein the first indication information indicates a terminal device to keep monitoring a signal via an MR of the terminal device after LP-WUS monitoring by the terminal device is activated.

40. The method according to claim 39, wherein the method further comprises:
sending fifth information, wherein the fifth information is used to configure the LP-WUS monitoring by the terminal device.

41. The method according to claim 40, wherein the method further comprises:
receiving eighth information from the terminal device, wherein the eighth information indicates that the LP-WUS monitoring by the terminal device is activated.

42. The method according to claim 40 or 41, wherein the method further comprises:
receiving seventh information from the terminal device, wherein the seventh information indicates that the LP-WUS monitoring by the terminal device is deactivated.

43. A communication apparatus, wherein the communication apparatus comprises a processing unit and a transceiver unit, and the processing unit is coupled to the transceiver unit, to perform the method according to any one of claims 1 to 6, the method according to any one of claims 7 to 11, the method according to any one of claims 12 to 17, the method according to any one of claims 18 to 21, the method according to any one of claims 22 to 27, the method according to any one of claims 28 to 31, the method according to any one of claims 32 to 38, or the method according to any one of claims 39 to 42.

44. A communication apparatus, wherein the communication apparatus comprises a processor, and the processor is configured to cause the communication apparatus to perform the method according to any one of claims 1 to 6, the method according to any one of claims 7 to 11, the method according to any one of claims 12 to 17, the method according to any one of claims 18 to 21, the method according to any one of claims 22 to 27, the method according to any one of claims 28 to 31, the method according to any one of claims 32 to 38, or the method according to any one of claims 39 to 42.

45. A computer-readable storage medium, wherein the computer-readable storage medium is configured to store a computer program, and when the computer program is run on a computer, the computer is caused to perform the method according to any one of claims 1 to 6, the method according to any one of claims 7 to 11, the method according to any one of claims 12 to 17, the method according to any one of claims 18 to 21, the method according to any one of claims 22 to 27, the method according to any one of claims 28 to 31, the method according to any one of claims 32 to 38, or the method according to any one of claims 39 to 42.

46. A computer program product, wherein the computer program product comprises a computer program, and when the computer program is run on a computer, the computer is caused to perform the method according to any one of claims 1 to 6, the method according to any one of claims 7 to 11, the method according to any one of claims 12 to 17, the method according to any one of claims 18 to 21, the method according to any one of claims 22 to 27, the method according to any one of claims 28 to 31, the method according to any one of claims 32 to 38, or the method according to any one of claims 39 to 42.
